# EUROPEAN PATENT APPLICATION

(11) **EP 4 787 231 A1**
(43) Date of publication of application: **05.08.2026**
(21) Application number: 26153907.6
(22) Date of filing: 23.01.2026
(51) Int. Cl.: G06N 3/045, G06N 3/0475, G06N 3/0895, G06N 3/094, G06N 3/0455

(54) **VISION-LANGUAGE MODEL (VLM) REFINEMENT VIA MULTIMODAL DIALOGS**

(30) Priority: 30.01.2025 GR 20250100065
(71) Applicant: GDM Holding LLC, Mountain View CA 94043 (US)
(72) Inventor: KONYUSHKOVA, Ksenia, London (GB); KAPLANIS, Christos, London (GB); DENIL, Misha Man Ray, Rabat (MA)
(74) Representative: Anderson, Oliver Ben

(57) **Abstract**

Implementations enable scalable generation of high-quality, diverse training data for vision-language model(s) (VLM(s)). Processor(s) of a system can configure a dialog between at least a first VLM and a second VLM, cause the dialog to be conducted, and generate training instance(s) based on the dialog. In configuring the dialog, the first VLM is provided by a target image and a first set of instructions for the dialog, and the second VLM is provided with an ordered set of candidate images (e.g., the target image and additional image(s)) and a second set of instructions for the dialog. In causing the dialog to be conducted, the second VLM generates question(s) (e.g., using the second set of instructions) to ask the first VLM in furtherance of identifying the target image, in the ordered set of candidate images, and the first VLM generates response(s) (e.g., using the first set of instructions) to the question(s).

## Description

### Background

Trained models, such as trained generative models or other trained neural network models, have been trained and utilized for various purposes. For example, various generative models, such as image generation models, video generation models, vision-language models, and multimodal input and/or output models have been proposed and trained for various purposes. For instance, image generation models have been trained to process input data (e.g., natural language and/or a base image) to generate output that reflects a generative synthetic image that can be rendered as output to a user and/or provided to a separate neural network model and/or to a separate system. As another instance, multimodal models have been proposed that have been trained to process multimodal input data, such as input data that includes image(s), text, and/or audio, and to generate output data such as multimodal output data that includes text, synthesized audio, and/or synthetic image(s).

Performance of these generative models scales directly with not only the amount of training data on which they are trained, but also on the quality of the training data on which they are trained. However, it has proven difficult to obtain a sufficient amount of new high-quality training data to train some of these generative models. For example, vision-language models and multimodal input and/or output models may require some training data that includes carefully curated interleaved image and text data. While recent efforts have demonstrated that some of these generative models can be utilized to generate synthetic training data for training some of these generative models, these recent efforts suffer one or more drawbacks. For instance, many of these recent efforts lack scalability in that they cannot generate a sufficient amount of training data, and this lack of scalability is often exacerbated for particular tasks and/or particular domains. Also, for instance, many of these recent efforts lack sufficient mechanisms to ensure the objective high-quality of this training data, much less at the aforementioned scale that is needed.

### Summary

Implementations disclosed herein are directed to scalable generation of high-quality, diverse training data for vision-language model(s) (VLM(s)). Processor(s) of a system can configure a dialog between at least a first VLM and a second VLM, cause the dialog to be conducted, and generate training instance(s) based on the dialog that can be subsequently utilized in training a given VLM (e.g., the first VLM, the second VLM, or a third VLM). In configuring the dialog, the processor(s) can provide the first VLM with a target image and a first set of instructions for the dialog, and can provide the second VLM with an ordered set of candidate images (e.g., the target image and additional image(s)) and a second set of instructions for the dialog. In causing the dialog to be conducted, the processor(s) can cause the second VLM to generate question(s) (e.g., using the second set of instructions) to ask the first VLM in furtherance of identifying the target image, in the ordered set of candidate images, and can cause the first VLM to generate response(s) (e.g., using the first set of instructions) to the question(s). Accordingly, the first VLM is also referred to herein as a "Describer" VLM and the second VLM is also referred to herein as a "Guesser" VLM since the goal of the dialog is for the first VLM is to describe the target image and for the second VLM to ask questions to identify and guess the target image in the ordered set of candidate images. Further, the dialog is also referred to herein as "self-play" or a "dialog game" since the dialog conducted between the first VLM and the second VLM is conducted based on the first set of instructions and the second set of instructions, respectively, and without any human or other user in-the-loop.

Implementations disclosed herein can mitigate (e.g., eliminate) various drawbacks with current techniques. For example, the nature of the dialog ensures that any resulting training instances are relevant and of high quality, addressing the lack of quality control in existing self-improvement methods. For instance, the nature of the dialog requires the first VLM and the second VLM interacting with one another by using respective sets of instructions and working towards a common goal - the second VLM correctly guessing the target image in the ordered set of candidate of candidate images - rather than just prompting one of the first VLM or the second VLM to generate the dialog in a single call or one-shot approach. This results in dialogs that are more reflective of dialogs that would be encountered at inference time, thereby ensuring the objective high-quality of the dialog. As another example, the self-play mechanism between the first VLM and the second VLM provides a scalable method for generating large amounts of training data, overcoming the limitations of existing methods that struggle with scalability, especially for specific tasks and domains (e.g., robotic tasks, medical diagnostic tasks, etc.). For instance, the dialog can be configured with image(s) and/or instruction(s) for any particular task or domain, and the image(s) can include real image(s) and/or generative image(s). This enables the dialog to specifically target these particular tasks or domains where there may be no/little real data for utilization in training the given VLM.

In some implementations, the processor(s) can, prior to generating the training instance(s) based on the dialog, determine whether to utilize the dialog in generating the training instance(s) for subsequent utilization in training the given VLM. Put another way, the processor(s) can validate or filter the dialog to ensure it reflects high-quality training data by way of the second VLM asking appropriate questions that result in the successful identification of the target image, in the ordered set of candidate images, during the dialog. However, not only can the processor(s) consider the successful identification of the target image, in the ordered set of candidate images, during the dialog for validation or filtering purposes, but the processor(s) consider the successful identification of the target image across different permutations of the dialog. For example, the processor(s) can configure an additional dialog between at least the first VLM and the second VLM, cause the additional dialog to be conducted, and determine, based on at least a result of the dialog and the additional dialog, whether to utilize the dialog in generating the training instance(s) for subsequent utilization in training the given VLM. In configuring the additional dialog, the processor(s) can provide the first VLM with the same target image and the same first set of instructions for the additional dialog as in the dialog, but can provide the second VLM with an alternative ordered set of candidate images (e.g., a permuted order of the target image and additional image(s) relative to the dialog) and the second set of instructions for the dialog. Assuming the second VLM asks appropriate questions that result in the successful identification of the target image, in the alternative ordered set of candidate images, during the additional dialog, the dialog can be utilized in generating the training instance(s) for subsequent utilization in training the given VLM. Otherwise, the dialog and/or the additional dialog can be discarded.

These implementations can further mitigate (e.g., eliminate) various drawbacks with current techniques. For example, the automatic filtering of successful dialogs based on the second VLM's ability to consistently identify the target image across multiple permutations further enhances quality of the training data and reduces the reliance on manual curation to obtain high-quality training data. For instance, if a dialog is deemed unsuccessful, generating training instance(s) based on the dialog is skipped. Also, for instance, if the dialog is deemed unsuccessful, additional dialog(s) that are a permutation of the dialog are also skipped. These measures avoid unnecessary further processing when the dialog does not represent a threshold level of quality for subsequent utilization in training the given VLM. However, if a dialog is deemed successful, additional dialog(s) that are a permutation of the dialog may be performed to ensure the quality of the training data prior to generating the training instance(s). If these additional dialog(s) is/are deemed unsuccessful, generating training instance(s) based on the dialog and/or the additional dialog(s) is/are skipped. Accordingly, these techniques balance consumption of computational resources by refraining from any further processing for unsuccessful dialogs, but further vets successful dialogs to objectively enhance the quality of the training data.

As a non-limiting example of some implementations disclosed herein, consider a robotic clothes-folding task. The first VLM can receive an image showing a robot's arm positioned to grasp a shirt, the initial stage of the folding process. The second VLM receives this image along with three additional images (also referred to herein as "distractor images"): one showing the robot arm in a different pose unrelated to clothes folding, one showing the shirt unfolded on a table, and one showing the shirt partially folded. In this example, assume that the second VLM, aiming to identify the correct image, asks the first VLM "Is the robot's gripper closed around a piece of clothing?", and assume that the first VLM responds affirmatively. Based on this turn of the dialog, further assume that the second VLM asks "Is the clothing item a shirt?", and further assume that the first VLM confirms the clothing item is a shirt. Thus, the second VLM can now identify the first image as the target image. Based on the dialog being successful, training instance(s) can be generated, where each of the training instance(s) can include a corresponding training instance input (e.g., the target image paired with a question asked by the second VLM) and a corresponding training instance output (e.g., the answer provided by the first VLM and responsive to the question asked by the second VLM in the corresponding training instance input). This data can then be used to train the VLMs (e.g. ,the first VLM, the second VLM, or any other VLM that did not participate in the dialog game).

Continuing with the above example, further assume that the processor(s) validate or filter the dialog to ensure it reflects high-quality training data by way of the second VLM asking appropriate questions that result in the successful identification of the target image, in the ordered set of candidate images, during the dialog and by conducting an additional dialog. For the additional dialog, the target image (showing the robot's arm grasping a shirt) and the three distractor images can be presented to the second VLM in a different order. For example, the second VLM can first see the image of the unfolded shirt, then the image of the robot arm in a different pose, then the image of the partially folded shirt, and finally the target image. The goal remains for the second VLM to identify the target image by asking questions. To achieve this, the second VLM can ask questions like, "Is the robot interacting with an item of clothing?", followed by "Is the clothing fully folded?", and finally, "Is the robot's gripper closed around the clothing?". The first VLM would answer these questions truthfully. If the second VLM correctly identifies the target image despite the permuted order, this demonstrates that its success is not due to chance but to its ability to ask relevant questions and interpret the answers. Only consistently successful dialogs across different permutations may be retained for training. This ensures that the training data used to improve the VLMs is of high quality and reflects a genuine understanding of the task. Although the above example is only described with respect to performing a single additional dialog with a single permuted order of the images, it should be understood that is for the sake of illustrating various techniques contemplated herein and is not meant to be limiting. Rather, it should be understood that further additional dialog(s) can be performed with additional permuted order(s) of the images to further validate or filter the dialog.

In some implementations, and assuming training instance(s) are generated based on the dialog and/or the additional dialog(s), the processor(s) can cause the given VLM to be trained. In some versions of those implementations, the given VLM can be associated with a first-party entity that distributes, manages, and/or controls the system whereas, in additional or alternative implementations, the given VLM can be associated with a third-party entity that is in addition to the first-party entity that distributes, manages, and/or controls the system. In implementations where the given VLM is associated with the first-party entity, the given VLM can be the first VLM and/or the second VLM that was configured for the dialog, and/or a third VLM that is in addition to any VLM that was configured for the dialog. In implementations where the given VLM is associated with the third-party entity, the given VLM can be a third VLM that is in addition to any VLM that was configured for the dialog (e.g., a VLM that is associated with the third-party entity). Put another way, the processor(s) can utilize the techniques described herein to generate the training instance(s) for subsequent utilization in training any VLM and, in some situations, can generate the training instance(s) as a service for the third-party entity to enable the third-party entity to obtain training instance(s) for particular tasks and/or for particular domains in which it is otherwise difficult to obtain the training instance(s).

As noted above, each of the training instance(s) can include a corresponding training instance input and a corresponding training instance output. The corresponding training instance input can include a target image and a question asked by the second VLM during the dialog, and the corresponding training instance output (also referred to herein as "corresponding ground truth output") can include an answer provided by the first VLM during the dialog that is responsive to the question included in the corresponding training instance input. For example, in the robotic clothes-folding scenario, if the second VLM successfully identifies the target image by asking "Is the robot's gripper closed around a piece of clothing?", and the first VLM answers "yes," this exchange can form a training instance along with the target image. The processor(s) can then use these training instance(s) to train the given VLM, thereby enhancing the VLM's ability to, for example, understand and answer questions about images. In causing the given VLM to be trained based on a given training instance, the processor(s) can process, using the given VLM, the target image and the question asked by the second VLM (e.g., the corresponding training instance input) to generate a predicted answer, generate one or more losses by comparing the predicted answer to the answer provided by the first VLM (e.g., the corresponding training instance output), and update the given VLM based on the one or more losses (e.g., using backpropagation or another technique). Notably, in implementations where the given VLM is associated with the third-party entity, the processor(s) can transmit the training instance(s) to a third-party system that is associated with the third-party entity, and third-party processor(s) of the third-party system can cause the given VLM to be trained in the same or similar manner.

In some implementations, the processor(s) can generate multiple training instances based on a single dialog between the first VLM and the second VLM. For instance, each question-answer pair from the dialog, along with the target image, can be utilized to generate a separate training instance. Continuing with the above example related to the robotic clothes-folding task, if the second VLM asks "Is the robot's gripper closed around a piece of clothing?" and the first VLM answers "yes," this can be utilized to generate one training instance along with the target image. If the second VLM then asks "Is the clothing item a shirt?", and the first VLM replies "yes," this can be utilized to generate another training instance along with the target image. This process continues for each question-answer exchange, generating multiple training instances from a single dialog, thereby increasing the amount of training data generated while reducing the amount of dialogs that are needed.

In some implementations, the processor(s) can select the target image randomly or based on the desired domain or task. Continuing with the above example related to the robotic clothes-folding task, the target image might depict a robot successfully completing a specific folding step. The at least one additional image, or distractor images, are chosen to increase the challenge of the identification task. These distractor images are carefully selected to be visually or semantically similar to the target image, forcing the second VLM to ask more precise questions to distinguish the target image from the distractor images, to distinguish the successful completion of the folding step from the other stages or unrelated actions, etc. The selection criteria can be based on, for example, visual similarity (e.g., similar color palettes, object arrangements), semantic similarity (e.g., images depicting similar actions or objects in different stages of a task), or other factors. The visual and semantic similarities ensure that the questions asked are not trivial and require a deeper understanding of the image or the task. The number of distractor images can be adjusted to control the difficulty of the identification task. Further, a quantity of additional dialogs performed with permuted orders of the images can vary based on the number of distractor images. Notably, the selection of the distractor images may be crucial for generating high-quality training data. Distractor images that are too dissimilar to the target image would make the identification task trivial, resulting in uninformative dialogs and low-quality training data. Conversely, distractor images that are too similar to the target image would make the identification task too difficult, leading to few successful dialogs and insufficient training data. Therefore, a careful balance must be struck to create a challenging yet solvable identification task, leading to a rich and informative training instance(s) for training the VLMs.

In some implementations, the first set of instructions that are provided to the first VLM can instruct the first VLM to truthfully and accurately answer questions about the target image that are generated by the second VLM. Further, the second set of instructions that are provided to the second VLM can instruct the second VLM to generate questions to identify the target image in the ordered set of candidate images. The second set of instructions that are provided to the second VLM can further instruct the second VLM to make a prediction of the target image only when it predicts that a known current description of the target image is sufficient to identify the target image. Otherwise, the second VLM is instructed to generate questions to identify the target image in response to predicting that a known current description of the target image is insufficient to identify the target image. The second VLM generates a concise summary of the dialog's current state as a single image description in response to receiving each answer from the first VLM to maintain the current description of the target image to ensure that the second VLM maintains an up-to-date understanding of the target image's characteristics as the dialog progresses. In some versions of those implementations, both the first and second sets of instructions can be tailored to a particular task or a particular domain, allowing for focused improvement of the VLMs' capabilities for that particular task within that particular domain. As another example that is in addition to the example related to the robotic clothes-folding task, if the goal is to improve the VLMs' performance in analyzing medical images, the instructions can be designed to reflect the specific terminology and context of medical imaging.

Although the above examples are described with respect to generating training instance(s) that are in Visual Question Answering (VQA) format (e.g., the corresponding training instance input including the target image and a question asked by the second VLM during the dialog, and the corresponding training instance output including an answer provided by the first VLM during the dialog that is responsive to the question included in the corresponding training instance input) and based on certain dialogs, it should be understood that is for the sake of example and is not meant to be limiting. For example, the same or similar techniques are also contemplated herein for other dialogs that can be configured for generating training instance(s) for image generation tasks, prompt expansion tasks, and/or other tasks. However, it should be noted that these dialogs may vary from those described above. Nonetheless, it should be noted that techniques described herein are not limited to generating only training instance(s) that are in VQA format.

As described herein, a VLM can be any machine learning model capable of processing at least textual data (or audio data) and vision data, and capable of generating at least one of generative textual data (or generative audio data), and optionally other forms of generative data. Some non-limiting examples of machine learning models that are capable of generating one or more forms of the generative data noted above include transformer-based machine learning models (e.g., encoder-decoder transformer models, encoder-only transformer models, decoder-only transformer models, etc. that optionally employ an attention mechanism or some other form of memory), stable diffusion-based machine learning models, recurrent neural network-based machine learning models, generative adversarial network-based machine learning models, etc. Various machine learning models have demonstrated multimodal capabilities in that they are capable of processing inputs in various modalities (e.g., text-based inputs, vision-based inputs, audio-based inputs, etc.) and generating outputs in various modalities (e.g., text-based output, vision-based outputs, audio-based generative outputs, etc.).

The above description is provided as an overview of some implementations of the present disclosure. Further description of those implementations, and other implementations, are described in more detail below.

### Brief Description of the Drawings

FIG. 1 illustrates an example environment in which implementations disclosed herein can be implemented.
FIG. 2 illustrates an example dialog between a first VLM and a second VLM, according to various implementations disclosed herein.
FIG. 3 is a flowchart illustrating an example method of configuring a dialog between a first VLM and a second VLM, causing the dialog to be conducted, and generating training instance(s) for subsequent utilization in training a given VLM, according to various implementations disclosed herein.
FIG. 4 is a flowchart illustrating an example method of validating a dialog, according to various implementations disclosed herein.
FIG. 5 is a flowchart illustrating an example method of generating, based on a dialog, training instance(s) for subsequent utilization in training a given VLM, according to various implementations disclosed herein.
FIG. 6 is a flowchart illustrating an example method of training a given VLM, according to various implementations disclosed herein.
FIG. 7 schematically depicts an example architecture of a computer system.

### Detailed Description

Some non-limiting examples of implementations disclosed herein are directed to the use of multimodal dialogs to improve specific capabilities of vision-language model(s) (VLM(s)). The dialog can be configured with two VLMs that are pre-trained for instruction following. These two VLMs can include a first VLM (also referred to as a "Describer" VLM) and a second VLM (also referred to as a "Guesser" VLM). In configuring the dialog, techniques described herein leverage a source of raw, unlabeled images to obtain a target im-age and several distractor images.

During the dialog, the Guesser VLM's objective is to identify the target image from among an ordered set of candidate images including the target image and the several distractor images. The De-scriber VLM can be provided with the target image and can be prompted to answer questions about it. However, given the imperfections of these VLMs, the Describer VLM may occasionally provide incorrect an-swers to questions asked by the Guesser VLM. The Guesser VLM can be presented with the ordered set of candidate images and attempt to identify the target image. To achieve this, the Guesser VLM can be instructed to pose targeted questions about the target image's content, aiming to disambiguate it from the distractor images. Put another way, techniques described herein demonstrate that this framework can facilitate VLM self-improvement through goal-oriented self-play.

Due to these VLMs instruction-following and image-understanding capabilities, the VLMs can achieve a non-zero success rate in these dialogs. This inherent ability can provide a scalable method for generating interleaved image-text data. How-ever, initial performance may be imperfect (e.g., the De-scriber VLM may provide incorrect answers, and the Guesser VLM may ask irrelevant questions). Nonetheless, the dialog's structure allows for the identification of suc-cessful dialog instances where the Guesser VLM cor-rectly identifies the target image. By filtering for these successful dialogs, techniques described herein can automatically ob-tain a high-quality dataset of interleaved data. Furthermore, techniques described herein can leverage the permutation symmetries of the dialog, ensuring the goal can be achieved consistently regardless of image order. This curated dataset of training instance(s) is then used to train a given VLM, thereby improving the given VLM's overall capabilities.

Notably, techniques described herein demonstrate that training VLMs using training instance(s) from these dialogs yields signifi-cant and measurable improvements, not just in future dialogs, but also on image understanding benchmarks. For example, configuring these dialogs with images from Openlmages has yielded signifi-cant and measurable improvements on Visual Question Answering (VQA) related tasks from other datasets, such as increased accuracy on VQAv2 benchmark. Furthermore, the techniques described herein are adaptable to specific domains. For example, initially the Guesser VLM's accuracy in a robotics scenes task was close to ran-dom guess. However, by configuring these dialogs with images from robotics episodes, techniques described herein have demonstrated significant improvement.

In some implementations, processor(s) of a system can provide the Describer VLM with a single target image and can instruct it to faithfully answer questions about the single target image. The processor(s) can provide the Guesser VLM with several images, one of which is the same as the target image, but other images are the distractor images. In these implementations, the Guesser VLM's objective is to identify the target image by posing ques-tions to the Describer VLM. Behavior of both the Describer VLM and the Guesser VLM can be controlled with prompting mechanisms for VLMs which is described in more detail herein.

Techniques described herein include features that can enable VLM self-improvement, such as self-play for data generation and automatic suc-cess determination. Notably, self-play provides a scalable approach to training data generation and collection. However, the training data generated through this method is inherently of mixed quality. Accordingly, an automatic method for determining game success can be utilized to filter and retain only high-quality training data. This automatic success determination can provide a direct measure of dialog quality based on the Guesser VLM's prediction of the target image in the ordered set of candidate images. Put another way, if the Guesser VLM's prediction of the target image matches the target image, the dialog is considered successful and can be added to the training data. Otherwise, the dialog is discarded.

The fol-lowing workflow can be utilized for VLM self-improvement: (1) dialog configuration; (2) dialog generation; (3) dialog validation or filtering; and (4) model improvement. For the dialog configuration, the processor(s) can configure the dialog with a designated image dataset. For the dialog generation, the processor(s) can cause the dialog to be conducted between the Describer VLM and the Guesser VLM. For the dialog validation or filtering, the processor(s) can validate or filter the dialogs based on various success criteria. For the model improvement, a given VLM (e.g., the Describer VLM, the Guesser VLM, and/or any other VLMs) can be trained using the validated or filtered dialogs.

In some implementations, and in configuring the dialog, instructions can be provided to the Describer VLM and the Guesser VLM to guide the dialog. In some versions of those implementations, the Guesser VLM can operate in two stages, (1) a questioning/guessing stage; and (2) a summary stage. During the questioning/guessing stage, being initially provided with an empty image description, the Guesser VLM can either ask a clarifying question to distinguish the target image from the distractor images in the ordered set of candidate images (e.g., assuming a current known description of the target image is insufficient for identification), or make a guess of the target image (e.g., "I know the answer, I think it is image X," where X is an index of the predicted target image in the ordered set of candidate images). During the summary stage, given an initial image description of the target image (or a previous summary of what is known about the target image), a question from the Guesser VLM, and/or the Describer VLM's answer, the Guesser VLM can create a concise summary of the dialog's current state as a single image description. In additional or alternative versions of those implementations, the Describer can be instructed to answer questions about the target image truthfully and accurately. Some specific prompt details for both the Describer VLM and the Guesser VLM are provided herein, but are not meant to be limiting.

In some implementations, and in configuring the dialog, images can be provided to the Describer VLM and the Guesser VLM. The im-ages used during the dialog can be sourced from vari-ous datasets, including general datasets of natu-ral images like OpenImages, or domain-specific datasets tailored to applications such as robotics or medicine. Notably the dialog's difficulty is controlled through several factors related to image selection, such as a number of distractor images, image similarity, and/or based on other factors. In terms of the number of distractor images, increasing the num-ber of distractor images directly increases difficulty of the dialog since the Guesser VLM needs to attend to a larger context, there is an increased likelihood of a distractor image more closely re-sembling the target image, and there is a greater number of image permutations which should result in successful dialog during validation or filtering as described herein. In terms of the image similarity, randomly selecting images from the dataset can create an easier game, while grouping visually or se-mantically similar images can increase the difficulty of the dialog.

In some implementations, and in generating the dialog, the instructions provided in configuring the dialog cause the Describer VLM and the Guesser VLM to engage in an interactive dialog. For example, a single VLM with different prompts (or multiple different VLMs) can be used to elicit the desired behavior for each task (ques-tioning or guessing by the Guesser VLM, answering by the Describer VLM, and dialog summarization by the Guesser VLM). For evaluating tasks of interest formulated as VQA, the generated dialogs can be transformed into a training instance(s) mirroring the standard VQA format: each instance consists of an image, a question about that image, and the corresponding answer. Notably, a single dialog game can yield multiple training instances.

In some implementations, and in validating or filtering the dialog, techniques described herein can directly verify the Guesser VLM's final selection. However, to mitigate the possibility of correct guesses occurring by chance, an additional validating or filtering can be performed. For the additional validating or filtering can be performed, an additional dialog can be configured and generated using the same images but in a permuted order. This can prevent the Guesser VLM from exploiting positional biases (e.g., a tendency to select the first image when multiple images fit a description). Accordingly, only dialogs where the Guesser VLM consistently identifies the correct target image across these permuta-tions may be retained for generating the training instance(s).

In some versions of those implementations, because the number of possible image permu-tations grows rapidly with the number of images, techniques described herein can limit the tested permutations to *N* for computational efficiency (e.g., where *N* is a positive integer). Empirically, it has been observed that the position of the target image has the most sig-nificant impact on the Guesser VLM's accuracy, while the relative order of the distractor images (given a fixed dialog) has a smaller effect. Therefore, within the N permutations, techniques described herein can ensure that the target im-age appears at each possible position (1 to *N*), while the distractor images order remains fixed. The datapoints from these consistently successful dialogs form the validated or filtered dataset for generating the training instance(s) that are utilized in subsequent model improvement.

In some implementations, and model improvement, the validated or filtered dataset, including images, ques-tions, and answers from successful dialogs, can be used to train the given VLM, which can mirror the stan-dard procedure for VQA task training. While this process can improve the performance for future dialogs (e.g., the success rate at identifying the target image when the given VLM that is trained is the Describer VLM and/or the Guesser VLM), the given VLM can also be evaluated in terms of its capabilities on more rele-vant downstream tasks. For instance, if the dialog utilizes images from a robotics domain, techniques described herein might assess the trained given VLM's performance on tasks such as robotic success detection.

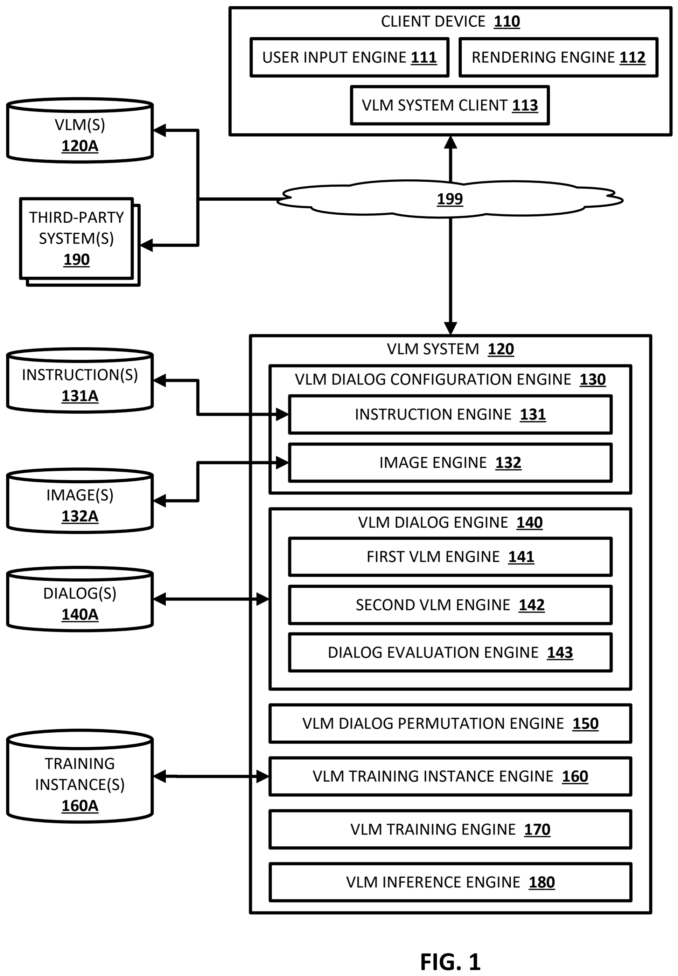

Turning now to FIG. 1, a block diagram of an example environment that demonstrates various aspects of the present disclosure, and in which implementations disclosed herein can be implemented is depicted. A client device 110 is illustrated in FIG. 1, and includes, in various implementations, a user input engine 111, a rendering engine 112, and a vision-language model (VLM) system client 113. The client device 110 may be, for example, one or more of: a desktop computer, a laptop computer, a tablet, a mobile phone, a computing device of a vehicle (e.g., an in-vehicle communications system, an in-vehicle entertainment system, an in-vehicle navigation system), a standalone interactive speaker (optionally having a display), a smart appliance such as a smart television, a video game console, and/or a wearable apparatus of the user that includes a computing device (e.g., a watch of the user having a computing device, glasses of the user having a computing device, a virtual or augmented reality computing device, etc.). Additional and/or alternative client devices may be provided.

The user input engine 111 can detect various types of user input at the client device 110. In some examples, the user input detected at the client device 110 can include spoken utterance(s) of a human user of the client device 110 that is detected via microphone(s) of the client device 110. In these examples, the microphone(s) of the client device 110 can generate audio data that captures the spoken utterance(s). In other examples, the user input detected at the client device 110 can include touch input of a human user of the client device 110 that is detected via user interface input device(s) (e.g., touch sensitive display(s)) of the client device 110, and/or typed input detected via user interface input device(s) (e.g., touch sensitive display(s) and/or keyboard(s)) of the client device 110. In these examples, the user interface input device(s) of the client device 110 can generate textual data that captures the touch input and/or the typed input. In other examples, the user input detected at the client device 110 can include vision-based input of a human user of the client device 110 that is detected via vision component(s) (e.g., camera(s)) of the client device 110.

The rendering engine 112 can cause content and/or other output to be visually rendered for presentation to the user at the client device 110 (e.g., via a touch sensitive display or other user interface output device(s)) and/or audibly rendered for presentation to the user at the client device 110 (e.g., via speaker(s) or other user interface output device(s)). The content and/or other output can include, for example, a transcript of a conversation between a user of the client device 110 and an automated assistant executing at least in part at the client device 110, an indication of actions to be performed by an automated assistant executing at least in part at the client device 110, notifications, selectable graphical elements, and/or any other content and/or output described herein.

The client device 110 is illustrated in FIG. 1 as communicatively coupled to a VLM system 120 over one or more networks 199 (e.g., any combination of WiFi, Bluetooth, or other local area networks (LANs); ethernet, the Internet, or other wide area networks (WANs); and/or any other wired or wireless networks). The VLM system 120 can be implemented by, for example, a high-performance server, a cluster of high-performance servers, and/or any other computing device that is remote from the client device 110. The VLM system 120 includes, in various implementations, a VLM dialog configuration engine 130, a VLM dialog engine 140, a VLM dialog permutation engine 150, a VLM training instance engine 160, a VLM training engine 170, and a VLM inference engine 180. The VLM dialog configuration engine 130 can include various sub-engines, such as an instruction engine 131 and an image engine 132. Further, the VLM dialog engine 140 can include various sub-engines, such as a first VLM engine 141, a second VLM engine 142, and a dialog evaluation engine 143. Although FIG. 1 is depicted with respect to certain engines and sub-engines, it should be understood that is for the sake of example and is not meant to be limiting. For example, one or more of the engines and/or sub-engines depicted in FIG. 1 can be combined and/or omitted.

The client device 110 and/or the VLM system 120 can access various databases and/or systems. For instance, the client device 110 and/or the VLM system 120 can access VLM(s) database 120A that stores one or more VLMs as described herein, instruction(s) database 131A that stores different sets of instructions for different VLMs, different sets of instructions for different tasks or domains, etc. as described herein, image(s) database 132A that stores different image(s) or sets of image(s) as described herein, dialog(s) database 140A that stores different dialogs that are conducted as described herein, and/or training instance(s) database 160A that stores training instances generated using techniques described herein. However, in some implementations, the client device 110 may not have access to any of the databases. Although FIG. 1 is depicted with respect to certain databases and systems, it should be understood that is for the sake of example and is not meant to be limiting. For example, one or more of the databases and/or systems depicted in FIG. 1 can be combined and/or omitted.

Further, the client device 110 and/or the VLM system 120 can interact with various third-party system(s) 190. As described herein, the VLM system 120 may be a first-party system that is distributed, managed, and/or controlled by a first-party entity. The third-party system(s) 190 can be associated with a third-party entity that is in addition to the first-party entity that distributes, manages, and/or controls the VLM system 120. Notably, techniques described herein can be utilized to generate training instance(s) for a third-party entity. Accordingly, the client device 110 and/or the VLM system 120 can interact with the third-party system(s) 190 to determine a task or domain to for dialog(s) can be configured, to obtain sets of instructions from the third-party entity, to obtain image(s) from the third-party entity, to provide dialog(s) to the third-party entity, to provide training instance(s) to the third-party entity, and/or otherwise interact with the third-party entity via the third-party system(s) 190. These implementations may be particularly advantageous for the third-party entity as a mechanism to obtain training instance(s) for tasks or domains for which it would otherwise be difficult to obtain.

Moreover, the client device 110 can execute the VLM system client 113. An instance of the VLM system client 113 can be an application that is separate from an operating system of the client device 110 (e.g., installed "on top" of the operating system) - or can alternatively be implemented directly by the operating system of the client device 110. The VLM system client 113 can communicate with the VLM system 120 via one or more of the networks 199 (e.g., as shown in FIG. 1). It should be understood that the VLM system client 113 can implement the VLM system 120 locally at the client device 110 via the VLM system client 113. However, it should also be understood that one or more aspects of the VLM system 120 can be implemented remotely from the client device 110 (e.g., exclusively at a high-performance server or cluster of high-performance servers), or both remotely the VLM system 120 and locally the client device 110 (e.g., via the VLM system client 113) in a distributed manner. For example, the VLM system 120 can execute one of the first VLM or the second VLM, and the VLM system client 113 can execute another one of the first VLM or the second VLM locally at the client device 110.

Furthermore, the client device 110 and/or the VLM system 120 may include one or more memories for storage of data and software applications, one or more processors for accessing data and executing the software applications, and other components that facilitate communication over one or more of the networks 199. In some implementations, one or more of the software applications can be installed locally at the client device 110, whereas in other implementations one or more of the software applications can be hosted remotely from the client device 110 (e.g., by one or more servers), but accessible by the client device 110 over one or more of the networks 199.

Although FIG. 1 is described with respect to a single client device having a single user, it should be understood that is for the sake of example and is not meant to be limiting. For example, one or more additional client devices of a user can also implement the techniques described herein. For instance, the client device 110, the one or more additional client devices, and/or any other computing devices of the user can form an ecosystem of devices that can employ techniques described herein. These additional client devices and/or computing devices may be in communication with the client device 110 and/or the VLM system 120 (e.g., over the one or more networks 199). As another example, a given client device can be utilized by multiple users in a shared setting (e.g., a group of users, a household, etc.).

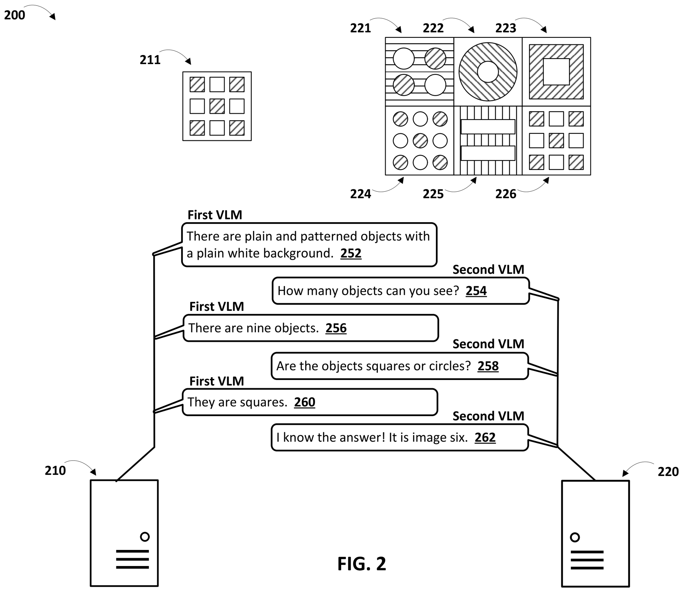

Additional description of the VLM dialog configuration engine 130, the VLM dialog engine 140, the VLM dialog permutation engine 150, the VLM training instance engine 160, the VLM training engine 170, and the VLM inference engine 180 is provided herein (e.g., with respect to FIGS. 2, 3, 4, 5, and 6).

Turning now to FIG. 2, an example dialog 200 between a first VLM 210 and a second VLM 220 is depicted. For convenience, the first VLM 210 is depicted as being executed at a first high-performance server and the second VLM 220 is depicted as being executed at a second high-performance server. However, it should be understood that is for the sake of example and is not meant to be limiting. Rather, it should be understood that the first VLM 210 and the second VLM 220 can be executed at the same high-performance server, the first VLM 210 can be executed at a high-performance server and the second VLM 220 can be executed at a client device (e.g., the client device 110 from FIG. 1), the first VLM 210 can be executed at a client device (e.g., the client device 110 from FIG. 1) and the second VLM 220 can be executed at a high-performance server, the first VLM 210 and the second VLM 220 can be executed at a client device (e.g., the client device 110 from FIG. 1), and so on. Further, although the first VLM 210 and the second VLM 220 are depicted as being separate VLMs, it should be understood that is also for the sake of example and is not meant to be limiting. Rather, it should be understood that the first VLM 210 and the second VLM 220 can additionally, or alternatively, can be the same VLM that is instructed differently based on a given turn of the dialog 200.

For the sake of example, assume that the first VLM 210 receives a first set of instructions for the dialog 200, and assume that the second VLM 220 receives a second set of instructions for the dialog 200. In this example, the VLM dialog configuration engine 130 can cause the instruction engine 131 to obtain and provide the respective sets of instructions to the first VLM 210 and the second VLM 220. In some implementations, the respective sets of instructions can be obtained from the instruction(s) database 131A whereas, in other implementations, the respective sets of instructions can be obtained from a developer associated with the VLM system 120 and/or the third-party system(s) 190.

For instance, the first set of instructions provided to the first VLM 210 (e.g., the Describer VLM) can include: "You are given an image and your task is to answer a given question about it. Be precise and accurate. Only answer the question, do not say anything else about the image." Further, the second set of instructions provided to the second VLM 220 (e.g., the Guesser VLM) can include: "You are given several images and an initial image description. This image description refers to only a single image, however, the image description might be incomplete. Your task is the following: if the image description can only refer to a single image, output an index of the image; if the image description can refer to more than one image, ask an additional question to narrow down the space of possible images. Update the image description after each you receive an answer to each question". In various implementations, the respective sets of instructions can be specific to a particular task or a particular domain, such as a robotic success detection task or a robotic domain, a medical diagnostic task or a medical domain, etc.

Further assume that the first VLM 210 receives a target image 211, and further assume that the second VLM 220 receives an ordered set of candidate images 221, 222, 223, 234, 225, 226. In this example, the VLM dialog configuration engine 130 can cause the image engine 132 to obtain and provide the respective images to the first VLM 210 and the second VLM 220. In some implementations, the respective images can be obtained from the image(s) database 132A whereas, in other implementations, the respective images can be obtained from a developer associated with the VLM system 120 and/or the third-party system(s) 190.

In implementations where the image engine 132 obtains the image(s) database 132A, the image engine 132 can utilize various selection criteria that can influence a difficulty of the dialog 200. The selection criteria can include, for example, visual similarity (e.g., similar color palettes, object arrangements), semantic similarity (e.g., images depicting similar actions or objects in different stages of a task), and/or other criteria. Further, the image engine 132 can select a particular amount of additional images which can also influence the difficulty of the dialog 200. For example, the image engine 132 can select four, five, ten, or more other images for the ordered set of candidate images 221, 222, 223, 234, 225, 226.

As depicted in FIG. 2, the target image 211 that is provided to the first VLM 210 includes nine squares with five of the nine squares including a pattern and the other four of the squares not including a pattern. Assuming that the image engine 132A utilizes the aforementioned selection criteria to select the candidate images in the ordered set of candidate images, the image engine 132A can select a first candidate image 221 that includes four circles having the same pattern as the target image 211 and with a different background, a second candidate image 222 that includes two concentric circles having the same pattern therebetween, a third candidate image 223 that includes two concentric squares having the same pattern therebetween, a fourth candidate image 224 that includes nine circles with five of the nine circles including a pattern and the other four of the circles not including a pattern, and a fifth candidate image 225 that includes two horizontal rectangles and with a different background. Notably, a sixth candidate image 226 in the ordered set of candidate images 221, 222, 223, 224, 225, 226 is the target image 211. Further, not only are the candidate images 221, 222, 223, 224, 225 visually similar to the target image 211 (e.g., including the same or similar pattern as the target image 211) but they are also semantically similar to the target image 211 (e.g., including the same or similar types of objects as the target image 211).

Subsequent to the dialog 200 being configured, the VLM dialog engine 140 can cause the dialog 200 to be conducted between the first VLM 210 and the second VLM 220. For example, assume that the first VLM engine 141 causes the first VLM 210 to provide an initial description of the target image 211 by rendering first VLM dialog content 252 of "There are plain and patterned objects with a plain white background". Based on the initial description provided by the first VLM 210, the second VLM 220 can eliminate the first candidate image 221 and the fifth candidate image 225 from consideration as the target image 211 since both of these images have a patterned background instead of a plain white background. However, the initial description provided to the second VLM 220 is insufficient to identify the target image 211 since each of the second candidate image 222, the third candidate image 223, the fourth candidate image 224, and the sixth candidate image 226 include plain and patterned objects and a plain white background.

Further assume that the second VLM 210 determines that it cannot identify the target image 211 in the ordered set of candidate images 221, 222, 223, 224, 225, 226 and the second VLM engine 142 causes the second VLM 220 to continue the dialog 200 by rendering second VLM dialog content 254 of "How many objects can you see?", and that the first VLM engine 141 causes the first VLM 210 to respond by rendering first VLM dialog content 256 of "There are nine objects". Based on the answer provided by the first VLM 210, the second VLM 220 can eliminate the second candidate image 222 and the third candidate image 223 from consideration as the target image 211 since neither of these images have nine objects. Moreover, and based on the answer provided by the first VLM 210, the second VLM engine 142 can cause the second VLM 220 to update a current known description of the target image 211 (e.g., "Plain and patterned objects. White background. Nine objects."). However, the current known description determined by the second VLM 220 is still insufficient to identify the target image 211 since each of the fourth candidate image 224 and the sixth candidate image 226 include plain and patterned objects, a plain white background, and nine objects.

Further assume that the second VLM 210 determines that it still cannot identify the target image 211 in the ordered set of candidate images 221, 222, 223, 224, 225, 226 and the second VLM engine 142 causes the second VLM 220 to continue the dialog 200 by rendering second VLM dialog content 258 of "Are the objects squares or circles?", and that the first VLM engine 141 causes the first VLM 210 to respond by rendering first VLM dialog content 260 of "They are squares". Based on the answer provided by the first VLM 210, the second VLM 220 can eliminate the fourth candidate image 224 from consideration as the target image 211 since the objects are circles. Moreover, and based on the answer provided by the first VLM 210, the second VLM engine 142 can cause the second VLM 220 to update a current known description of the target image 211 (e.g., "Plain and patterned objects. White background. Nine squares."). Since only one image, in the ordered set of candidate images 221, 222, 223, 224, 225, 226, matches the current known description of the target 211, the second VLM engine 142 can cause the second VLM 220 to conclude the dialog 200 by rendering second VLM dialog content 262 of "I know the answer! It is image six".

Subsequent to the dialog 200 being conducted, the VLM dialog engine 140 can store the dialog 200 in the dialog(s) database 140A and cause the dialog evaluation engine 143 to validate or filter the dialog 200. For example, the dialog evaluation engine 143 can determine whether the second VLM 220 correctly identified the target image 211. In the example of FIG. 2, the second VLM selected the sixth candidate image 226 as corresponding to the target image 211 and, as a result, the dialog evaluation engine 143 can determine that the second VLM 220 correctly identified the target image 211. Accordingly, the dialog 200 can be utilized in generating training instance(s) for subsequent utilization in training a given VLM (e.g., the first VLM 210, the second VLM 220, and/or a third VLM). However, in various implementations, if the dialog evaluation engine 143 determines that the second VLM 220 did not correctly identify the target image 211, the dialog 200 could be discarded and not utilized in generating instance(s).

In some implementations, and assuming that the dialog evaluation engine 143 determines the second VLM 220 correctly identified the target image 211 during the dialog 200, the VLM dialog permutation engine 150 can configure an additional dialog between the first VLM 210 and the second VLM 220, that is based on the dialog 200, cause the additional dialog to be conducted, and cause the dialog evaluation engine 143 to validate or filter the additional dialog. Notably, the VLM dialog configuration engine 130 can configure the additional dialog in the same manner as described above with respect to the dialog 200, but the VLM dialog permutation engine 150 can ensure that the additional dialog includes a permuted order of the ordered set of candidate images 221, 222, 223, 224, 225, 226. Put another way, the additional dialog is configured with the same images, but in a different order to prevent the second VLM 220 from exploiting spatial bias (e.g., a tendency to select the first image when multiple images fit a description or the like).

In these implementations, and assuming that the dialog evaluation engine 143 determines the second VLM 220 correctly identified the target image 211 during the additional dialog, the VLM dialog permutation engine 150 can configure a yet another additional dialog between the first VLM 210 and the second VLM 220, that is based on the dialog 200 and/or the additional dialog, cause the yet another additional dialog to be conducted, and cause the dialog evaluation engine 143 to validate or filter the yet another additional dialog. Notably, the VLM dialog configuration engine 130 can configure the yet another additional dialog in the same manner as described above with respect to the dialog 200 and the additional dialog, but the VLM dialog permutation engine 150 can ensure that the yet another additional dialog includes an additional permuted order of the ordered set of candidate images 221, 222, 223, 224, 225, 226. Put another way, the yet another additional dialog is configured with the same images, but in a yet another different order to prevent the second VLM 220 from exploiting spatial bias.

In some versions of these implementations, the VLM permutation engine 150 can limit the number of additional dialogs that can be configured to balance usage of computational resources. However, in additional or alternative versions of these implementations, the VLM permutation engine 150 can cause all possible permutations to be configured before causing training instance(s) to be generated from the dialog 200, the additional dialog, and/or any other additional dialogs.

The VLM training instance engine 160 can generate one or more training instances based on the dialog 200 (and optionally any other dialogs). Each of the training instances can include a corresponding training instance input and a corresponding training instance output. The corresponding training instance input can include, for example, the target image 211 and second VLM dialog content. Further, the corresponding training instance output can include, for example, first VLM dialog content. Accordingly, based on the dialog 200 depicted in FIG. 2, the training instance engine 160 can generate a first training instance that includes the target image 211 and second VLM dialog content 254 as training instance input, and that includes first VLM content 256 as training instance output. Further, the training instance engine 160 can generate a second training instance that includes the target image 211 and second VLM content 258 as training instance input, and that includes first VLM content 260 as training instance output. The training instance engine 160 can cause these training instances to be stored in the training instance(s) database 160A. In implementations where additional dialogs are performed prior to generating the training instances, the training instance engine 160 can generate one or more of the training instances based on any of the additional dialogs as well.

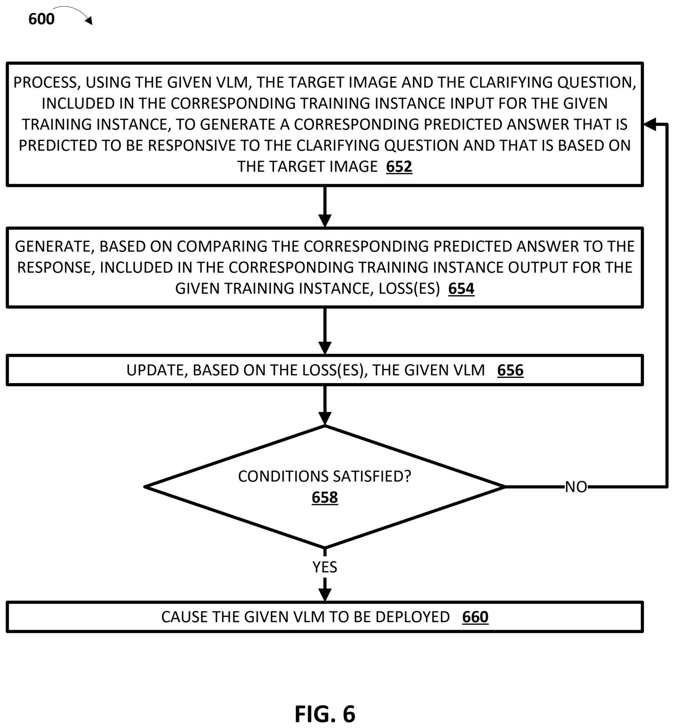

Subsequent to generating the one or more training instances, the VLM training engine 170 can train a given VLM (e.g., the first VLM 210, the second VLM 220, and/or a third VLM) based on the one or more training instances stored in the training instance(s) database 160A. Training the given VLM based on one or more of the training instances is described in more detail herein (e.g., with respect to FIG. 6). Further, subsequent to training the given VLM, the VLM inference engine 180 can cause the given VLM to be deployed. Deploying the given VLM is described in more detail herein (e.g., with respect to FIG. 6).

Although the dialog 200 is depicted in FIG. 2 with the first VLM 210 initiating the dialog 200 by providing the initial description of the target image 211, it should be understood that is for the sake of example and is not meant to be limiting. Rather, it should be understood that the second VLM 220 can, in various implementations, initiate the dialog 200 by asking an initial question about the target image 211.

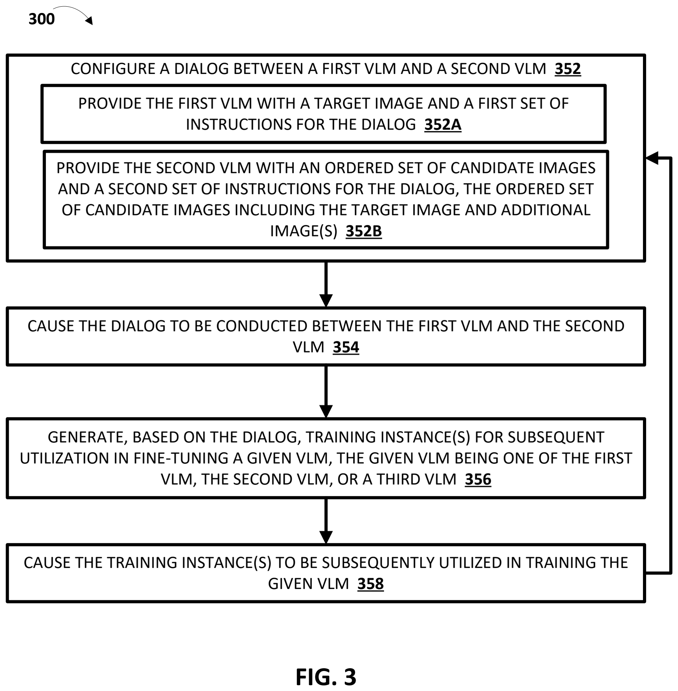

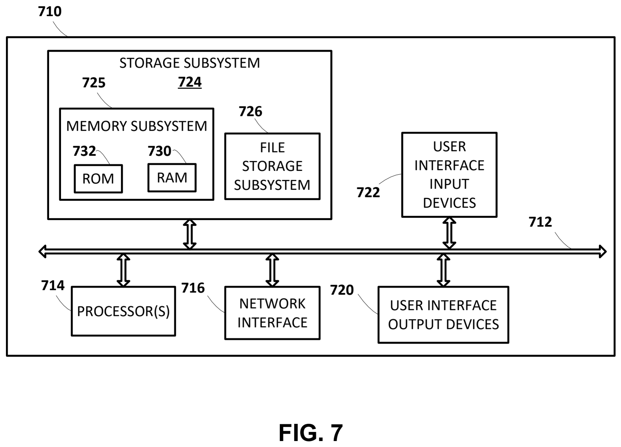

Turning now to FIG. 3, a flowchart illustrating an example method 300 of configuring a dialog between a first VLM and a second VLM, causing the dialog to be conducted, and generating training instance(s) for subsequent utilization in training a given VLM is depicted. For convenience, the operations of the method 300 are described with reference to a system that performs the operations. This system of the method 300 includes at least one processor, memory, and/or other component(s) of computing device(s) (e.g., the client device 110 of FIG. 1, VLM system 120 of FIG. 1, computing device 710 of FIG. 7, and/or other computing devices). Moreover, while operations of the method 300 are shown in a particular order, this is not meant to be limiting. One or more operations may be reordered, omitted, and/or added.

At block 352, the system configures a dialog between a first VLM and a second VLM. At sub-block 352A, and in configuring the dialog, the system can provide the first VLM with a target image and a first set of instructions for the dialog. At sub-block 352B, and in configuring the dialog, the system can provide the second VLM with an ordered set of candidate images and a second set of instructions for the dialog, the ordered set of candidate images including the target image and one or more additional images. For example, the system can cause the instruction engine 131 to obtain and provide the respective sets of instructions to the first VLM and the second VLM in the same or similar manner as described with respect to the dialog 200 of FIG. 2. Further, the system can cause the image engine 132 to obtain and provide the respective images to the first VLM and the second VLM in the same or similar manner as described with respect to the dialog 200 of FIG. 2.

At block 354, the system causes the dialog to be conducted between the first VLM and the second VLM. For example, the system can cause the first VLM engine 141 and the second VLM engine 142 to conduct the dialog between the first VLM and the second VLM in the same or similar manner as described with respect to the dialog 200 of FIG. 2.

At block 356, the system generates, based on the dialog, one or more training instances for subsequent utilization in training a given VLM, the given VLM being one of the first VLM, the second VLM, or a third VLM. For example, the system can cause the training instance engine 160 to generate the one or more training instances in the same or similar manner as described with respect to the dialog 200 of FIG. 2.

At block 358, the system causes the one or more training instances to be subsequently utilized in training the given VLM. As noted above with respect to FIG. 2, training the given VLM based on one or more of the training instances is described in more detail herein (e.g., with respect to FIG. 6)

The system returns to block 352 to perform an additional iteration of the method 300 with respect to an additional dialog. The additional dialog can include different images and/or different instructions to generate additional training data for additional tasks or additional domains.

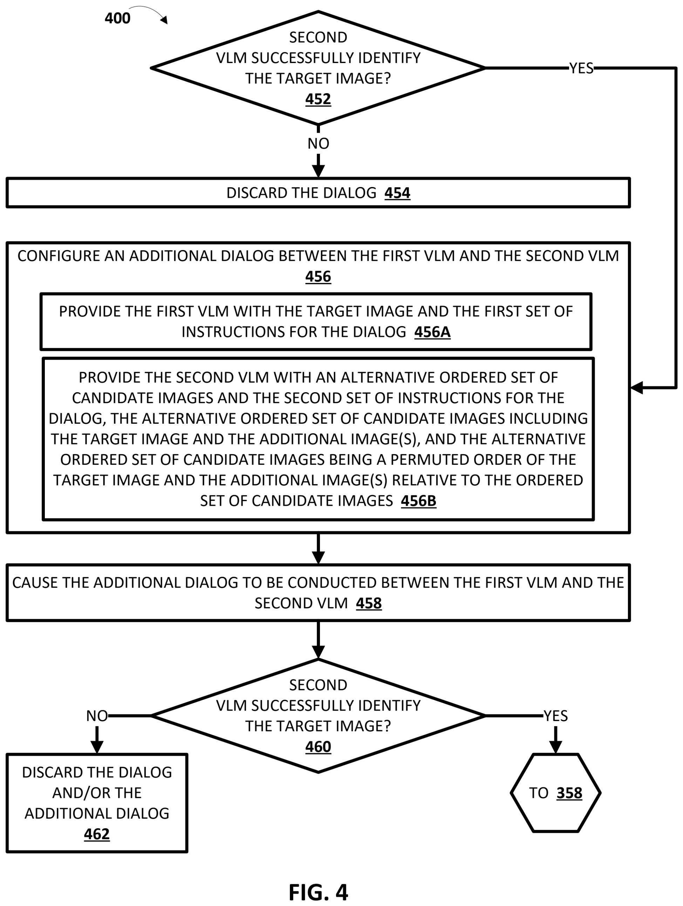

Although the method 300 of FIG. 3 is described with respect to the dialog and the additional dialog being performed in a serial manner, it should be understood that is for the sake of illustrating various techniques contemplated herein and is not meant to be limiting. Rather, it should be understood that the dialog, the additional dialog, and other additional dialogs can be performed in a parallel manner. Further, although the method 300 of FIG. 3 is described with respect to not validating or filtering the dialog, it should be understood that is for the sake of example and is not meant to be limiting. Validating or filtering the dialog is described in more detail herein (e.g., with respect to FIG. 4). However, it should be understood that techniques described herein do not require validating or filtering of the dialog.

Turning now to FIG. 4, a flowchart illustrating an example method 400 of validating a dialog is depicted. For convenience, the operations of the method 400 are described with reference to a system that performs the operations. This system of the method 400 includes at least one processor, memory, and/or other component(s) of computing device(s) (e.g., the client device 110 of FIG. 1, VLM system 120 of FIG. 1, computing device 710 of FIG. 7, and/or other computing devices). Moreover, while operations of the method 400 are shown in a particular order, this is not meant to be limiting. One or more operations may be reordered, omitted, and/or added.

At block 452, the system determines whether the second VLM successfully identified the target image, in the ordered set of candidate images, in the dialog that was conducted during the method 300 of FIG. 3. For example, the system can cause the dialog evaluation engine 143 to determine whether the second VLM successfully identified the target image, in the ordered set of candidate images, in the dialog that was conducted during the method 300 of FIG. 3 in the same or similar manner as described with respect to the dialog 200 of FIG. 2.

If, at an iteration of block 452, the system determines that the second VLM did not successfully identify the target image in the ordered set of candidate images, the system proceeds to block 454. At block 454, the system discards the dialog.

If, at an iteration of block 452, the system determines that the second VLM successfully identified the target image in the ordered set of candidate images, the system proceeds to block 456. At block 456, the system configures an additional dialog between the first VLM and the second VLM. At sub-block 456A, and in configuring the additional dialog, the system can provide the first VLM with the target image and the first set of instructions for the dialog. At sub-block 456B, and in configuring the additional dialog, the system can provide the second VLM with an alternative ordered set of candidate images and the second set of instructions for the dialog, the alternative ordered set of candidate images including the target image and the one or more additional images, and the alternative ordered set of candidate images being a permuted order of the target image and the one or more additional images relative to the ordered set of candidate images.

For example, the system can cause the instruction engine 131 to obtain and provide the respective sets of instructions to the first VLM and the second VLM in the same or similar manner as described with respect to the dialog 200 of FIG. 2. Further, the system can cause the image engine 132 to obtain and provide the respective images to the first VLM and the second VLM in the same or similar manner as described with respect to the dialog 200 of FIG. 2. However, in configuring the additional dialog, the system can cause the VLM dialog permutation engine 150 to ensure the alternative ordered set of candidate images is a permuted relative to the ordered set of candidate images.

At block 458, the system causes the additional dialog to be conducted between the first VLM and the second VLM. For example, the system can cause the first VLM engine 141 and the second VLM engine 142 to conduct the additional dialog between the first VLM and the second VLM in the same or similar manner as described with respect to the dialog 200 of FIG. 2.

At block 460, the system determines whether the second VLM successfully identified the target image, in the alternative ordered set of candidate images, in the additional dialog that was conducted during the method 400 of FIG. 4. For example, the system can cause the dialog evaluation engine 143 to determine whether the second VLM successfully identified the target image, in the alternative ordered set of candidate images, in the additional dialog that was conducted during the method 400 of FIG. 4 in the same or similar manner as described with respect to the dialog 200 of FIG. 2.

If, at an iteration of block 460, the system determines that the second VLM did not successfully identify the target image in the alternative ordered set of candidate images, the system proceeds to block 462. At block 462, the system discards the dialog and/or the additional dialog.

If, at an iteration of block 460, the system determines that the second VLM successfully identified the target image in the alternative ordered set of candidate images, then the system proceeds to block 352 of the method 300 of FIG. 3. Put another way, the system may only generate the one or more training instances in response to determining that the second VLM successfully identified the target image during both the dialog and the additional dialog.

Although the method 400 of FIG. 4 is described with respect to configuring and conducting one additional dialog, it should be understood that is for the sake of example and is not meant to be limiting. Rather, it should be understood that further additional dialogs with additional permuted orders of the candidate images can be conducted to further validate or filter the dialog. Moreover, it should be noted that one or more of the training instances can be generated based on any of the dialogs that are validated or filtered.

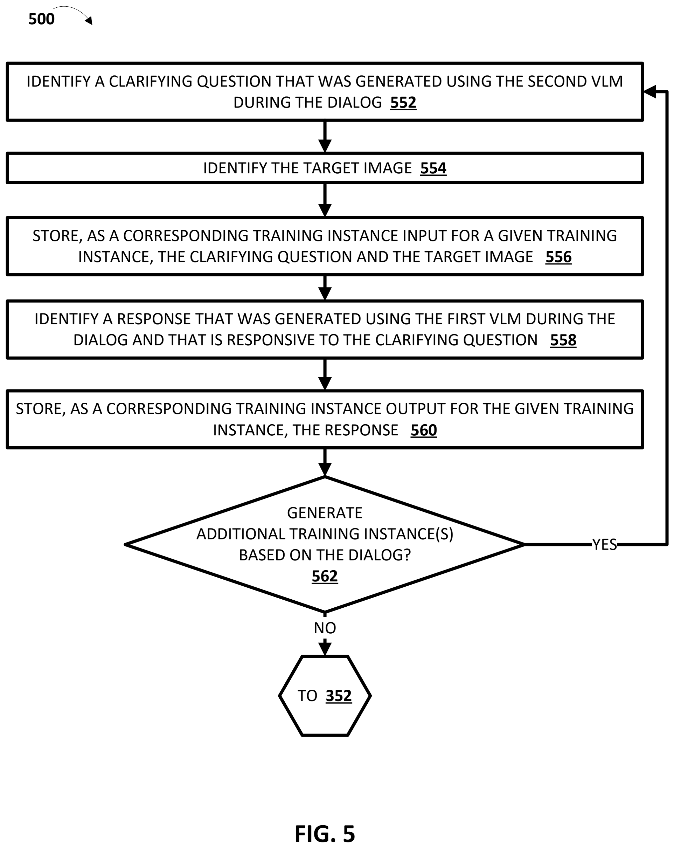

Turning now to FIG. 5, a flowchart illustrating an example method 500 of generating, based on a dialog, training instance(s) for subsequent utilization in training a given VLM is depicted. For convenience, the operations of the method 500 are described with reference to a system that performs the operations. This system of the method 500 includes at least one processor, memory, and/or other component(s) of computing device(s) (e.g., the client device 110 of FIG. 1, VLM system 120 of FIG. 1, computing device 710 of FIG. 7, and/or other computing devices). Moreover, while operations of the method 500 are shown in a particular order, this is not meant to be limiting. One or more operations may be reordered, omitted, and/or added.

At block 552, the system identifies a clarifying question that was generated using the second VLM during the dialog that was conducted during the method 300 of FIG. 3. At block 554, the system identifies the target image. At block 556, the system stores, as a corresponding training instance input for a given training instance, the clarifying question and the target image. For example, the system can cause the training instance engine 160 to identify the clarifying question that was generated using the second VLM during the dialog (e.g., second VLM content 254 and target image 211 from the dialog 200 of FIG. 2). The training instance input can be stored in the training instance(s) database 160A as part of a given training instance.

At block 558, the system identifies a response that was generated using the first VLM during the dialog and that is responsive to the clarifying question. At block 560, the system stores, as a corresponding training instance output for the given training instance, the response. For example, the system can cause the training instance engine 160 to identify the response that was generated using the first VLM during the dialog and that is responsive to the clarifying question that was identified at the operations of block 552 (e.g., first VLM content 256 from the dialog 200 of FIG. 2). The training instance output can be stored in the training instance(s) database 160A as part of the given training instance and in association with the corresponding training instance input.

At block 562, the system determines whether to generate one or more additional training instances based on the dialog. The system can determine whether to generate one or more additional training instances based on whether the dialog includes additional clarifying questions and additional responses. For example, the system can cause the training instance engine 160 to analyze the dialog to determine whether it includes any additional clarifying questions and additional responses.

If, at an iteration of block 562, the system determines to generate one or more additional training instances based on the dialog, the system returns to block 552 and continues with an additional iteration of the method 300, but with respect to an additional clarifying question and an additional response (e.g., second VLM content 258 from the dialog 200 of FIG. 2 and first VLM content 260 from the dialog 200 of FIG. 2). Notably, the target image will be the same for the dialog and a subsequent iteration of the operations of block 554 can be omitted.

If, at an iteration of block 562, the system determines not to generate one or more additional training instances based on the dialog, then the system proceeds to block 352 of the method 300 of FIG. 3. Put another way, the system can continue configuring and causing dialogs to be conducted in an attempt to generate additional training instances.

Although the method 500 of FIG. 5 is described with respect to only generating the one or more training instances based on the dialog, it should be understood that is for the sake of example and is not meant to be limiting. Rather, it should be understood that additional iterations of the method 500 of FIG. 5 can be performed with respect to any additional dialogs described with respect to the method 400 of FIG. 4. Any of these additional iterations of the method 500 of FIG. 5 can be performed in a serial or parallel manner.

Turning now to FIG. 6, a flowchart illustrating an example method 600 of training a given VLM is depicted. For convenience, the operations of the method 600 are described with reference to a system that performs the operations. This system of the method 600 includes at least one processor, memory, and/or other component(s) of computing device(s) (e.g., the client device 110 of FIG. 1, VLM system 120 of FIG. 1, computing device 710 of FIG. 7, and/or other computing devices). Moreover, while operations of the method 600 are shown in a particular order, this is not meant to be limiting. One or more operations may be reordered, omitted, and/or added.

At block 652, the system processes, using the given VLM, the target image and the clarifying question, included in the corresponding training instance input for the given training instance, to generate a corresponding predicted answer that is predicted to be responsive to the clarifying question and that is based on the target image. As described with respect to the method 500 of FIG. 5, the corresponding training instance input for the given training instance can include a clarifying question and a target image. Accordingly, the system can cause the VLM training engine 170 to process, using the given VLM, the target image and the clarifying question, included in the corresponding training instance input for the given training instance, to generate the corresponding predicted answer that is predicted to be responsive to the clarifying question and that is based on the target image. For instance, assume that the given training instance is based on second VLM content 254, target image 211, and first VLM content 256 from the dialog 200 of FIG. 2. In this example, the training engine 170 can process, using the given VLM, the target image 211 and the second VLM content 254 of "How many objects do you see?" to generate the corresponding predicted answer.

At block 654, the system generates, based on comparing the corresponding predicted answer to the response, included in the training instance output for the given training instance, one or more losses. As described with respect to the method 500 of FIG. 5, the corresponding training instance output for the given training instance can include an answer that is responsive to the corresponding clarifying question. Accordingly, the system can cause the VLM training engine 170 to compare the corresponding predicted answer to the response (e.g., "There are nine objects" or simply "nine") to generate one or more losses. Generally, the given VLM generates output that is a probability distribution over a sequence of tokens. Accordingly, the training instance output can be transformed into a ground truth probability distribution over a sequence of tokens to enable comparison of the probability distribution to the ground truth probability distribution to generate the one or more losses as a function of differences between the probability distribution and the ground truth probability distribution.

At block 656, the system updates, based on the one or more losses, the given VLM. For example, the system can cause the VLM training engine 170 to update the given VLM based on the one or more losses (e.g., using backpropagation or another technique).

At block 658, the system determines whether one or more conditions for deploying the given VLM are satisfied. The one or more conditions can include, for example, whether a threshold quantity of training instances have been utilized in training the given VLM, whether a threshold duration of time has elapsed since the given VLM was last deployed, whether performance of the given VLM satisfies a threshold performance measure, and/or other conditions.

If, at an iteration of block 658, the system determines that the one or more conditions are not satisfied, then the system returns to block 652. The system can perform an additional iteration of the method 600 with respect to an additional training instance to continue training the given VLM.

If, at an iteration of block 658, the system determines that the one or more conditions are satisfied, then the system proceeds to block 660. At block 660, the system causes the given VLM to be deployed. For example, the VLM inference engine 180 can cause the VLM to be deployed and utilized for various tasks and/or across various domains.

Some non-limiting examples of tasks for which the given VLM can be deployed include, for instance, a VQA task, a captioning task, and a robotic success detection task. However, it should be understood that the given VLM can be trained and/or deployed for many other tasks across many other domains.

With respect to the VQA task, a given VLM that is trained in the manner described herein can be evaluated, for example, on the Openlmages dataset. For instance, a subset of 1000 random images can be selected and N images (where N is a positive integer greater than 1) can be utilized for each dialog. Techniques described herein have demonstrated, for N = 4, an accuracy increase from 73% to 84.4% between the pre-trained VLM and the trained VLM. Thus, techniques described herein have demonstrated improved capabilities for VQA tasks that translate to inference time. Accordingly, users can subsequently interact with the given VLM and ask questions about images/videos, and the accuracy of output generated by the given VLM is increased by virtue of training the given VLM as described herein.

With respect to the captioning task, a given VLM that is trained in the manner described herein can be evaluated, for example, on the Openlmages dataset. For instance, a subset of images can be selected and each image can be utilized for a given dialog along with an instruction of, for example, "generate a caption for this image". Techniques described herein have demonstrated improved capabilities in the form of better captions being generated for the images between the pre-trained VLM and the trained VLM. Thus, techniques described herein have demonstrated improved capabilities for captioning tasks that translate to inference time. Accordingly, users can subsequently caption content or consume content that is already captioned, and accuracy of the captions generated by the given VLM is increased by virtue of training the given VLM as described herein.

With respect to the robotic success detection task, a given VLM that is trained in the manner described herein can be evaluated, for example, on the robotic images dataset that include frames from a robotic task. For instance, a subset of images from the robotic task can be selected and each image can be utilized for a given dialog along with an instruction of, for example, "looking at the current scene, did the robot successfully solve the task". Techniques described herein have demonstrated an accuracy increase from 56.5% to 71.5% between the pre-trained VLM and the trained VLM. Accordingly, a robotic control policy can subsequently utilize the given VLM to determine whether to continue performance of a task or terminate performance of the task, and accuracy of this determination generated by the given VLM is increased by virtue of training the given VLM as described herein.

Although the method 600 of FIG. 6 is described with respect to the system training the given VLM, it should be understood that this is for the sake of example and is not meant to be limiting. Rather, it should be understood that one or more of the training instances can be generated on behalf of a third-party entity. In these implementations, any dialogs and/or any resulting training instances from any of the dialogs can be transmitted to the third-party system(s) 190 that are associated with the third-party entity, and the third-party entity can train the given VLM in the same or similar manner described above, but using the third-party system(s)190.

Turning now to FIG. 7, a block diagram of an example computing device 710 that may optionally be utilized to perform one or more aspects of techniques described herein. In some implementations, one or more of a client device, remote system component(s), and/or other component(s) may comprise one or more components of the example computing device 710.

Computing device 710 typically includes at least one processor 714 which communicates with a number of peripheral devices via bus subsystem 712. These peripheral devices may include a storage subsystem 724, including, for example, a memory subsystem 725 and a file storage subsystem 726, user interface output devices 720, user interface input devices 722, and a network interface subsystem 716. The input and output devices allow user interaction with computing device 710. Network interface subsystem 716 provides an interface to outside networks and is coupled to corresponding interface devices in other computing devices.

User interface output devices 720 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 710 to the user or to another machine or computing device.

Storage subsystem 724 stores programming and data constructs that provide the functionality of some or all of the modules described herein. For example, the storage subsystem 724 may include the logic to perform selected aspects of the methods disclosed herein, as well as to implement various components depicted in FIGS. 1 and 2.

These software modules are generally executed by processor 714 alone or in combination with other processors. Memory 725 used in the storage subsystem 724 can include a number of memories including a main random-access memory (RAM) 730 for storage of instructions and data during program execution and a read only memory (ROM) 732 in which fixed instructions are stored. A file storage subsystem 726 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 726 in the storage subsystem 724, or in other machines accessible by the processor(s) 714.

Bus subsystem 712 provides a mechanism for letting the various components and subsystems of computing device 710 communicate with each other as intended. Although bus subsystem 712 is shown schematically as a single bus, alternative implementations of the bus subsystem 712 may use multiple busses.

Computing device 710 can be of varying types including a workstation, server, computing cluster, blade server, server farm, or any other data processing system or computing device. Due to the ever-changing nature of computers and networks, the description of computing device 710 depicted in FIG. 7 is intended only as a specific example for purposes of illustrating some implementations. Many other configurations of computing device 710 are possible having more or fewer components than the computing device depicted in FIG. 7.

In situations in which the systems described herein collect or otherwise monitor personal information about users, or may make use of personal and/or monitored information), the users may be provided with an opportunity to control whether programs or features collect user information (e.g., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personal identifiable information is removed. For example, a user's identity may be treated so that no personal identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method implemented by one or more processors is provided and includes configuring a dialog between a first vision-language model (VLM) and a second VLM. Configuring the dialog between the first VLM and the second VLM includes providing the first VLM with a target image and a first set of instructions for the dialog, and providing the second VLM with an ordered set of candidate images and a second set of instructions for the dialog. The ordered set of candidate images includes the target image and at least one additional image. The method further includes causing the dialog to be conducted between the first VLM and the second VLM. The second VLM utilizes the second set of instructions for the dialog to generate one or more corresponding questions in furtherance of identifying the target image in the ordered set of candidate images, and the first VLM utilizes the first set of instructions for the dialog to generate one or more corresponding answers in furtherance of responding to the one or more corresponding questions. The method further includes determining, based on a result of the dialog that was conducted between the first VLM and the second VLM, whether to utilize the dialog in generating one or more training instances for subsequent utilization in training a given VLM, the given VLM being one of the first VLM, the second VLM, or a third VLM. The method further includes, in response to determining to utilize the dialog in generating one or more training instances for subsequent utilization in training the given VLM, generating, based on the dialog, the one or more training instances for subsequent utilization in training the given VLM, and causing the one or more training instances to be subsequently utilized in training the given VLM.

These and other implementations of technology disclosed herein can optionally include one or more of the following features.

In some implementations, the method further includes causing, based on the one or more training instances, the given VLM to be trained.

In some versions of those implementations, each of the one or more training instances can include a corresponding training instance input and a corresponding training instance output, the corresponding training instance input can include the target image and a given corresponding question, of the one or more corresponding questions, generated by the second VLM during the dialog, and the corresponding training instance output can include a given corresponding answer, of the one or more corresponding answers, generated by the first VLM during the dialog and responsive to the given corresponding question.

In some further versions of those implementations, causing the given VLM to be trained based on a given training instance, of the one or more training instances, can include processing, using the given VLM, the target image and the given corresponding question, included in the corresponding training instance input for the given training instance, to generate a corresponding predicted answer that is predicted to be responsive to the given corresponding question and that is based on the target image, generating, based on comparing the corresponding predicted answer to the given corresponding answer, included in the corresponding training instance output for the given training instance, one or more losses, and updating, based on the one or more losses, the given VLM.

In additional or alternative further versions of those implementations, the given VLM can be the third VLM, the third VLM can be associated with a third-party entity, and causing the given VLM to be trained based on a given training instance, of the one or more training instances, can include transmitting the one or more training instances to a third-party system that is associated with the third-party entity. Transmitting the one or more training instances to the third-party system can cause the third-party system to process, using the given VLM, the target image and the given corresponding question, included in the corresponding training instance input for the given training instance, to generate a corresponding predicted answer that is predicted to be responsive to the given corresponding question and that is based on the target image, generate, based on comparing the corresponding predicted answer to the given corresponding answer, included in the corresponding training instance output for the given training instance, one or more losses, and update, based on the one or more losses, the given VLM.

In some implementations, determining to utilize the dialog in generating one or more training instances for subsequent utilization in training the given VLM can be based on the result of the dialog that was conducted between the first VLM and the second VLM indicating that the second VLM successfully identified the target image in the ordered set of candidate images.

In some versions of those implementations, the method can further include, in response to the result of the dialog that was conducted between the first VLM and the second VLM indicating that the second VLM successfully identified the target image in the ordered set of candidate images configuring an additional dialog between the first VLM and the second VLM. Configuring the additional dialog between the first VLM and the second VLM can include providing the first VLM with the target image and the first set of instructions for the additional dialog, and providing the second VLM with an alternative ordered set of candidate images and the second set of instructions for the additional dialog. The alternative ordered set of candidate images can include the target image and the at least one additional image, and an order of the target image and the at least one additional image, in the alternative ordered set of candidate images for the additional dialog, can be a permuted order of the target image and the at least one additional image relative to the ordered set of candidate images for the additional dialog. The method can further include causing the additional dialog to be conducted between the first VLM and the second VLM. The second VLM can utilize the second set of instructions for the additional dialog to generate one or more additional corresponding questions in furtherance of identifying the additional target image in the ordered set of candidate images, and the first VLM can utilize the first set of instructions for the additional dialog to generate one or more additional corresponding answers in furtherance of responding to the one or more additional corresponding questions. Determining whether to utilize the dialog in generating the one or more training instances for subsequent utilization in training the given VLM can be further based on an additional result of the additional dialog that was conducted between the first VLM and the second VLM.

In some further versions of those implementations, the method can further include, in response to the additional result of the additional dialog that was conducted between the first VLM and the second VLM indicating that the second VLM successfully identified the target image in the alternative ordered set of candidate images, generating, based on the additional dialog, one or more of the training instances for subsequent utilization in training the given VLM.

In additional or alternative further versions of those implementations, the method can further include, in response to the additional result of the additional dialog that was conducted between the first VLM and the second VLM indicating that the second VLM did not successfully identify the target image in the alternative ordered set of candidate images, refraining from generating, based on the dialog, the one or more training instances for subsequent utilization in training the given VLM, discarding the dialog, and discarding the additional dialog.

In some implementations, the method can further include, in response to determining not to utilize the dialog in generating one or more training instances for subsequent utilization in training the given VLM, refraining from generating, based on the dialog, the one or more training instances for subsequent utilization in training the given VLM, and discarding the dialog.

In some versions of those implementations, determining to not utilize the dialog in generating one or more training instances for subsequent utilization in training the given VLM can be based on the result of the dialog that was conducted between the first VLM and the second VLM indicating that the second VLM did not successfully identify the target image in the ordered set of candidate images.

In additional or alternative versions of those implementations, in response to determining not to utilize the dialog in generating one or more training instances for subsequent utilization in training the given VLM, the method can further include configuring an additional dialog between the first VLM and the second VLM. Configuring the additional dialog between the first VLM and the second VLM can include providing the first VLM with an additional target image and the first set of instructions for the additional dialog, and providing the second VLM with an additional ordered set of candidate images and the second set of instructions for the additional dialog. The additional ordered set of candidate images can include the additional target image and at least one further additional image. The method can further include causing the additional dialog to be conducted between the first VLM and the second VLM. The second VLM can utilize the second set of instructions for the additional dialog to generate one or more additional corresponding questions in furtherance of identifying the additional target image in the additional ordered set of candidate images, and the first VLM can utilize the first set of instructions for the additional dialog to generate one or more additional corresponding answers in furtherance of responding to the one or more additional corresponding questions. The method can further include determining, based on an additional result of the additional dialog that was conducted between the first VLM and the second VLM, whether to utilize the additional dialog in generating one or more training instances for subsequent utilization in training the given VLM. The method can further include, in response to determining to utilize the additional dialog in generating one or more of the training instances for subsequent utilization in training the given VLM, generating, based on the additional dialog, one or more of the training instances for subsequent utilization in training the given VLM.

In some implementations, the method can further include selecting the target image, and selecting, based on the target image, the at least one additional image that is included in the ordered set of candidate images.

In some versions of those implementations, the target image can be selected based on the target image belonging to a particular domain, and the at least one additional image, that is included in the ordered set of candidate images, can be selected based on the at least one additional image also belonging to the particular domain.

In additional or alternative versions of those implementations, the at least one additional image, that is included in the ordered set of candidate images, can be selected based on the at least one additional image being visually similar to the target image.

In additional or alternative versions of those implementations, the at least one additional image, that is included in the ordered set of candidate images, can be selected based on the at least one additional image being semantically similar to the target image.

In some implementations, causing the dialog to be conducted between the first VLM and the second VLM can include processing, using the first VLM, at least the target image and the first set of instructions for the dialog to generate first VLM output, determining, based on the first VLM output, a description of the target image, causing the description of the target image to be provided by the first VLM and to the second VLM. processing, using the second VLM, at least the description of the target image, the second set of instructions for the dialog, and the ordered set of candidate images to generate second VLM output, and determining, based on the second VLM output, whether to ask the first VLM a clarifying question, as one or more of the corresponding questions in furtherance of identifying the target image in the ordered set of candidate images, or to make a prediction of the target image, from among the ordered set of candidate images.

In some versions of those implementations, the method can further include, in response to determining to ask the first VLM a clarifying question, determining, based on the second VLM output or additional second VLM output, the clarifying question, causing the clarifying question to be provided by the second VLM and to the first VLM, processing, using the first VLM, at least the target image, the first set of instructions for the dialog, and the clarifying question to generate additional first VLM output, determining, based on the additional first VLM output, a response to the clarifying question, causing the response to the clarifying question to be provided by the first VLM and to the second VLM, processing, using the second VLM, at least the response to the clarifying question, the second set of instructions for the dialog, and the ordered set of candidate images to generate further additional second VLM output, and determining, based on the further additional second VLM output, whether to ask the first VLM an additional clarifying question, as one or more of the corresponding questions in furtherance of identifying the target image in the ordered set of candidate images, or to make the prediction of the target image, from among the ordered set of candidate images.

In some further versions of those implementations, generating a given training instance, of the one or more training instances, for subsequent utilization in training the given VLM and based on the dialog can include generating a corresponding training instance input, for the given training instance, based on the target image and the clarifying question, and generating a corresponding training instance output, for the given training instance, based on the response to the clarifying question.

In some additional or alternative versions of those implementations, the method can further include, in response to determining to make the prediction of the target image, determining, based on the second VLM output or additional second VLM output, the prediction of the target image, causing the prediction of the target image to be provided by the second VLM and to the first VLM, and determining, based on the prediction of the target image, the result of the dialog.

In some implementations, causing the dialog to be conducted between the first VLM and the second VLM can include processing, using the second VLM, at least the ordered set of candidate images and the second set of instructions for the dialog to generate second VLM output, determining, based on the second VLM output, a clarifying question, as one or more of the corresponding questions in furtherance of identifying the target image in the ordered set of candidate images, causing the clarifying question to be provided by the second VLM and to the first VLM, processing, using the first VLM, at least the target image, the first set of instructions for the dialog, and the clarifying question to generate first VLM output, determining, based on the first VLM output, a response to the clarifying question, causing the response to the clarifying question to be provided by the first VLM and to the second VLM, processing, using the second VLM, at least the response to the clarifying question, the second set of instructions for the dialog, and the ordered set of candidate images to generate additional second VLM output, and determining, based on the additional second VLM output, whether to ask the first VLM an additional clarifying question, as one or more of the corresponding questions in furtherance of identifying the target image in the ordered set of candidate images, or to make the prediction of the target image, from among the ordered set of candidate images.

In some versions of those implementations, the method can further include, in response to determining to ask the first VLM an additional clarifying question, determining, based on the additional second VLM output or further additional second VLM output, the additional clarifying question, causing the additional clarifying question to be provided by the second VLM and to the first VLM, processing, using the first VLM, at least the target image, the first set of instructions for the dialog, and the additional clarifying question to generate additional first VLM output, determining, based on the additional first VLM output, an additional response to the additional clarifying question, causing the additional response to the additional clarifying question to be provided by the first VLM and to the second VLM, processing, using the second VLM, at least the additional response to the clarifying question, the second set of instructions for the dialog, and the ordered set of candidate images to generate yet further additional second VLM output, and determining, based on the yet further additional second VLM output, whether to ask the first VLM a further additional clarifying question, as one or more of the corresponding questions in furtherance of identifying the target image in the ordered set of candidate images, or to make the prediction of the target image, from among the ordered set of candidate images.

In some further versions of those implementations, generating a given training instance, of the one or more training instances, for subsequent utilization in training the given VLM and based on the dialog can include generating a corresponding training instance input, for the given training instance, based on the target image and the clarifying question, and generating a corresponding training instance output, for the given training instance, based on the response to the clarifying question.

In some yet further versions of those implementations, generating a given additional training instance, of the one or more training instances, for subsequent utilization in training the given VLM and based on the dialog can include generating a corresponding training instance input, for the given additional training instance, based on the target image and the additional clarifying question, and generating a corresponding training instance output, for the given training instance, based on the additional response to the additional clarifying question.

In additional or alternative versions of those implementations, the method can further include, in response to determining to make the prediction of the target image, determining, based on the additional second VLM output or further additional second VLM output, the prediction of the target image, causing the prediction of the target image to be provided by the second VLM and to the first VLM, and determining, based on the prediction of the target image, the result of the dialog.

In some implementations, the first set of instructions for the dialog can instruct the first VLM to truthfully and accurately generate the one or more corresponding answers in furtherance of responding to the one or more corresponding questions, the second set of instructions for the dialog can instruct the second VLM to generate the one or more corresponding questions in furtherance of identifying the target image in the ordered set of candidate images in response to predicting a known current description of the target image is insufficient to identify the target image, and the second set of instructions for the dialog can instruct the second VLM to make a prediction of the target image in the ordered set of candidate images in response to predicting a known current description of the target image is sufficient to identify the target image.

In some versions of those implementations, the second set of instructions for the dialog can further instruct the second VLM to generate, in response to receiving each of the one or more corresponding answers in furtherance of responding to the one or more corresponding questions, the known current description of the target image.

In additional or alternative versions of those implementations, the first set of instructions for the dialog can be specific to a particular domain of the target image, and the second set of instructions for the dialog can also be specific to the particular domain of the target image.

In some implementations, the dialog can be a text-based dialog or speech-based dialog.

In some implementations, the method can further include, subsequent to causing the given VLM to be trained based on the one or more training instances, causing the given VLM to be deployed.

In some versions of those implementations, causing the given VLM to be deployed can include receiving, from one or more vision components of a robot, vision data that captures performance of a robotic task by the robot, processing, using the given VLM, the vision data and a set of instructions associated with the robotic task to generate output, and determining, based on the output, whether the robot successfully performed the robotic task.

In some further versions of those implementations, the method can further include, in response to determining that the robot successfully performed the robotic task, causing the robot to terminate performance of the robotic task. In additional or alternative further versions of those implementations, in response to determining that the robot successfully performed the robotic task, causing the robot to continue performance of the robotic task.

In additional or alternative versions of those implementations, causing the given VLM to be deployed can include receiving vision data that captures an image or video, processing, using the given VLM, the vision data and a set of instructions associated with a captioning task to generate output, determining, based on the output, captions for the image or the video, and causing the captions for the image or the video to be stored in association with the image or the video.

In additional or alternative versions of those implementations, causing the given VLM to be deployed can include receiving, from one or more vision components of a client device, vision data that captures an environment of the client device or content that is being displayed on the client device, receiving, from one or more input components of the client device of a user, natural language input that includes a question with respect to the vision data, processing, using the given VLM, the vision data and the natural language input to generate output, determining, based on the output, an answer to the question included in the natural language input, and causing the answer to be provided for presentation to the user of the client device.

In additional or alternative versions of those implementations, the given VLM can be specific to a particular task or a particular domain. Causing the given VLM to be deployed can include causing the given VLM to be deployed for utilization in the particular task or the particular domain.

In additional or alternative versions of those implementations, the given VLM can be the third VLM, the third VLM can be associated with a third-party entity, and causing the given VLM to be deployed can include transmitting the given VLM to a third-party system that is associated with the third-party entity. Transmitting the given VLM to the third-party system can cause the third-party system to deploy the given VLM.

In additional or alternative versions of those implementations, causing the given VLM to be deployed can be in response to determining that one or more conditions are satisfied. The one or more conditions can include one or more of: whether a threshold quantity of training instances have been utilized in training the given VLM, whether a threshold duration of time has elapsed since the given VLM was last deployed, or whether performance of the given VLM satisfies a threshold performance measure.

In some implementations, a method implemented by one or more processors is provided and includes configuring a dialog between a first vision-language model (VLM) and a second VLM. Configuring the dialog between the first VLM and the second VLM includes providing the first VLM with a target image and a first set of instructions for the dialog, and providing the second VLM with an ordered set of candidate images and a second set of instructions for the dialog. The ordered set of candidate images includes the target image and at least one additional image. The method further includes causing the dialog to be conducted between the first VLM and the second VLM. The second VLM utilizes the second set of instructions for the dialog to generate one or more corresponding questions in furtherance of identifying the target image in the ordered set of candidate images, and the first VLM utilizes the first set of instructions for the dialog to generate one or more corresponding answers in furtherance of responding to the one or more corresponding questions. The method further includes generating, based on the dialog, the one or more training instances for subsequent utilization in training a given VLM, the given VLM being one of the first VLM, the second VLM, or a third VLM, and causing the one or more training instances to be subsequently utilized in training the given VLM.

The following numbered examples illustrate various feature combinations disclosed herein:
Example 1. A method implemented by one or more processors, the method comprising:
   configuring a dialog between a first vision-language model (VLM) and a second VLM, wherein configuring the dialog between the first VLM and the second VLM comprises:
      providing the first VLM with a target image and a first set of instructions for the dialog; and
      providing the second VLM with an ordered set of candidate images and a second set of instructions for the dialog, wherein the ordered set of candidate images includes the target image and at least one additional image;
   causing the dialog to be conducted between the first VLM and the second VLM,
   wherein the second VLM utilizes the second set of instructions for the dialog to generate one or more corresponding questions in furtherance of identifying the target image in the ordered set of candidate images, and wherein the first VLM utilizes the first set of instructions for the dialog to generate one or more corresponding answers in furtherance of responding to the one or more corresponding questions;
   determining, based on a result of the dialog that was conducted between the first VLM and the second VLM, whether to utilize the dialog in generating one or more training instances for subsequent utilization in training a given VLM, the given VLM being one of the first VLM, the second VLM, or a third VLM; and
   in response to determining to utilize the dialog in generating one or more training instances for subsequent utilization in training the given VLM:
      generating, based on the dialog, the one or more training instances for subsequent utilization in training the given VLM; and
      cause the one or more training instances to be utilized in training the given VLM.
Example 2. The method of example 1, further comprising: causing, based on the one or more training instances, the given VLM to be trained.
Example 3. The method of example 2, wherein each of the one or more training instances includes a corresponding training instance input and a corresponding training instance output, wherein the corresponding training instance input includes the target image and a given corresponding question, of the one or more corresponding questions, generated by the second VLM during the dialog, and wherein the corresponding training instance output includes a given corresponding answer, of the one or more corresponding answers, generated by the first VLM during the dialog and responsive to the given corresponding question.
Example 4. The method of example 3, wherein causing the given VLM to be trained based on a given training instance, of the one or more training instances, comprises:
   processing, using the given VLM, the target image and the given corresponding question, included in the corresponding training instance input for the given training instance, to generate a corresponding predicted answer that is predicted to be responsive to the given corresponding question and that is based on the target image;
   generating, based on comparing the corresponding predicted answer to the given corresponding answer, included in the corresponding training instance output for the given training instance, one or more losses; and
   updating, based on the one or more losses, the given VLM.
Example 5. The method of example 3, wherein the given VLM is the third VLM, wherein the third VLM is associated with a third-party entity, and wherein causing the given VLM to be trained based on a given training instance, of the one or more training instances, comprises:
   transmitting the one or more training instances to a third-party system that is associated with the third-party entity, wherein transmitting the one or more training instances to the third-party system causes the third-party system to:
   process, using the given VLM, the target image and the given corresponding question, included in the corresponding training instance input for the given training instance, to generate a corresponding predicted answer that is predicted to be responsive to the given corresponding question and that is based on the target image;
   generate, based on comparing the corresponding predicted answer to the given corresponding answer, included in the corresponding training instance output for the given training instance, one or more losses; and
   update, based on the one or more losses, the given VLM.
Example 6. The method of example 1, wherein determining to utilize the dialog in generating one or more training instances for subsequent utilization in training the given VLM is based on the result of the dialog that was conducted between the first VLM and the second VLM indicating that the second VLM successfully identified the target image in the ordered set of candidate images.
Example 7. The method of example 6, further comprising:
   in response to the result of the dialog that was conducted between the first VLM and the second VLM indicating that the second VLM successfully identified the target image in the ordered set of candidate images:
      configuring an additional dialog between the first VLM and the second VLM,
   wherein configuring the additional dialog between the first VLM and the second VLM comprises:
      providing the first VLM with the target image and the first set of instructions for the additional dialog; and
      providing the second VLM with an alternative ordered set of candidate images and the second set of instructions for the additional dialog, wherein the alternative ordered set of candidate images includes the target image and the at least one additional image, and wherein an order of the target image and the at least one additional image, in the alternative ordered set of candidate images for the additional dialog, is a permuted order of the target image and the at least one additional image relative to the ordered set of candidate images for the additional dialog;
      causing the additional dialog to be conducted between the first VLM and the second VLM, wherein the second VLM utilizes the second set of instructions for the additional dialog to generate one or more additional corresponding questions in furtherance of identifying the additional target image in the ordered set of candidate images, and wherein the first VLM utilizes the first set of instructions for the additional dialog to generate one or more additional corresponding answers in furtherance of responding to the one or more additional corresponding questions; and
      wherein determining whether to utilize the dialog in generating the one or more training instances for subsequent utilization in training the given VLM is further based on an additional result of the additional dialog that was conducted between the first VLM and the second VLM.
Example 8. The method of example 7, further comprising:
   in response to the additional result of the additional dialog that was conducted between the first VLM and the second VLM indicating that the second VLM successfully identified the target image in the alternative ordered set of candidate images:
   generating, based on the additional dialog, one or more of the training instances for subsequent utilization in training the given VLM.
Example 9. The method of example 7, further comprising:
   in response to the additional result of the additional dialog that was conducted between the first VLM and the second VLM indicating that the second VLM did not successfully identify the target image in the alternative ordered set of candidate images:
   refraining from generating, based on the dialog, the one or more training instances for subsequent utilization in training the given VLM; discarding the dialog; and discarding the additional dialog.
Example 10. The method of example 1, further comprising:
   in response to determining not to utilize the dialog in generating one or more training instances for subsequent utilization in training the given VLM:
   refraining from generating, based on the dialog, the one or more training instances for subsequent utilization in training the given VLM; and
   discarding the dialog.
Example 11. The method of example 10, wherein determining to not utilize the dialog in generating one or more training instances for subsequent utilization in training the given VLM is based on the result of the dialog that was conducted between the first VLM and the second VLM indicating that the second VLM did not successfully identify the target image in the ordered set of candidate images.
Example 12. The method of example 10, in response to determining not to utilize the dialog in generating one or more training instances for subsequent utilization in training the given VLM, further comprising:
   configuring an additional dialog between the first VLM and the second VLM, wherein configuring the additional dialog between the first VLM and the second VLM comprises:
      providing the first VLM with an additional target image and the first set of instructions for the additional dialog; and
      providing the second VLM with an additional ordered set of candidate images and the second set of instructions for the additional dialog, wherein the additional ordered set of candidate images includes the additional target image and at least one further additional image;
   causing the additional dialog to be conducted between the first VLM and the second VLM, wherein the second VLM utilizes the second set of instructions for the additional dialog to generate one or more additional corresponding questions in furtherance of identifying the additional target image in the additional ordered set of candidate images, and wherein the first VLM utilizes the first set of instructions for the additional dialog to generate one or more additional corresponding answers in furtherance of responding to the one or more additional corresponding questions;
   determining, based on an additional result of the additional dialog that was conducted between the first VLM and the second VLM, whether to utilize the additional dialog in generating one or more training instances for subsequent utilization in training the given VLM; and
   in response to determining to utilize the additional dialog in generating one or more of the training instances for subsequent utilization in training the given VLM:
      generating, based on the additional dialog, one or more of the training instances for subsequent utilization in training the given VLM.
Example 13. The method of example 1, further comprising: selecting the target image; and selecting, based on the target image, the at least one additional image that is included in the ordered set of candidate images.
Example 14. The method of example 13, wherein the target image is selected based on the target image belonging to a particular domain, and wherein the at least one additional image, that is included in the ordered set of candidate images, is selected based on the at least one additional image also belonging to the particular domain.
Example 15. The method of example 13, wherein the at least one additional image, that is included in the ordered set of candidate images, is selected based on the at least one additional image being visually similar to the target image.
Example 16. The method of example 13, wherein the at least one additional image, that is included in the ordered set of candidate images, is selected based on the at least one additional image being semantically similar to the target image.
Example 17. The method of example 1, wherein causing the dialog to be conducted between the first VLM and the second VLM comprises:
   processing, using the first VLM, at least the target image and the first set of instructions for the dialog to generate first VLM output;
   determining, based on the first VLM output, a description of the target image;
   causing the description of the target image to be provided by the first VLM and to the second VLM;
   processing, using the second VLM, at least the description of the target image, the second set of instructions for the dialog, and the ordered set of candidate images to generate second VLM output; and
   determining, based on the second VLM output, whether to ask the first VLM a clarifying question, as one or more of the corresponding questions in furtherance of identifying the target image in the ordered set of candidate images, or to make a prediction of the target image, from among the ordered set of candidate images.
Example 18. The method of example 17, further comprising:
   in response to determining to ask the first VLM a clarifying question:
   determining, based on the second VLM output or additional second VLM output, the clarifying question;
   causing the clarifying question to be provided by the second VLM and to the first VLM;
   processing, using the first VLM, at least the target image, the first set of instructions for the dialog, and the clarifying question to generate additional first VLM output;
   determining, based on the additional first VLM output, a response to the clarifying question;
   causing the response to the clarifying question to be provided by the first VLM and to the second VLM;
   processing, using the second VLM, at least the response to the clarifying question, the second set of instructions for the dialog, and the ordered set of candidate images to generate further additional second VLM output; and
   determining, based on the further additional second VLM output, whether to ask the first VLM an additional clarifying question, as one or more of the corresponding questions in furtherance of identifying the target image in the ordered set of candidate images, or to make the prediction of the target image, from among the ordered set of candidate images.
Example 19. The method of example 18, wherein generating a given training instance, of the one or more training instances, for subsequent utilization in training the given VLM and based on the dialog comprises:
   generating a corresponding training instance input, for the given training instance, based on the target image and the clarifying question; and
   generating a corresponding training instance output, for the given training instance, based on the response to the clarifying question.
Example 20. The method of example 17, further comprising:
   in response to determining to make the prediction of the target image:
      determining, based on the second VLM output or additional second VLM output,
   the prediction of the target image;
      causing the prediction of the target image to be provided by the second VLM and to the first VLM; and
      determining, based on the prediction of the target image, the result of the dialog.
Example 21. The method of example 1, wherein causing the dialog to be conducted between the first VLM and the second VLM comprises:
   processing, using the second VLM, at least the ordered set of candidate images and the second set of instructions for the dialog to generate second VLM output;
   determining, based on the second VLM output, a clarifying question, as one or more of the corresponding questions in furtherance of identifying the target image in the ordered set of candidate images;
   causing the clarifying question to be provided by the second VLM and to the first VLM;
   processing, using the first VLM, at least the target image, the first set of instructions for the dialog, and the clarifying question to generate first VLM output;
   determining, based on the first VLM output, a response to the clarifying question;
   causing the response to the clarifying question to be provided by the first VLM and to the second VLM;
   processing, using the second VLM, at least the response to the clarifying question, the second set of instructions for the dialog, and the ordered set of candidate images to generate additional second VLM output; and
   determining, based on the additional second VLM output, whether to ask the first VLM an additional clarifying question, as one or more of the corresponding questions in furtherance of identifying the target image in the ordered set of candidate images, or to make the prediction of the target image, from among the ordered set of candidate images.
Example 22. The method of example 21, further comprising:
   in response to determining to ask the first VLM an additional clarifying question:
   determining, based on the additional second VLM output or further additional second VLM output, the additional clarifying question;
   causing the additional clarifying question to be provided by the second VLM and to the first VLM;
   processing, using the first VLM, at least the target image, the first set of instructions for the dialog, and the additional clarifying question to generate additional first VLM output;
   determining, based on the additional first VLM output, an additional response to the additional clarifying question;
   causing the additional response to the additional clarifying question to be provided by the first VLM and to the second VLM;
   processing, using the second VLM, at least the additional response to the clarifying question, the second set of instructions for the dialog, and the ordered set of candidate images to generate yet further additional second VLM output; and
   determining, based on the yet further additional second VLM output, whether to ask the first VLM a further additional clarifying question, as one or more of the corresponding questions in furtherance of identifying the target image in the ordered set of candidate images, or to make the prediction of the target image, from among the ordered set of candidate images.
Example 23. The method of example 22, wherein generating a given training instance, of the one or more training instances, for subsequent utilization in training the given VLM and based on the dialog comprises:
   generating a corresponding training instance input, for the given training instance, based on the target image and the clarifying question; and
   generating a corresponding training instance output, for the given training instance, based on the response to the clarifying question.
Example 24. The method of example 23, wherein generating a given additional training instance, of the one or more training instances, for subsequent utilization in training the given VLM and based on the dialog comprises:
   generating a corresponding training instance input, for the given additional training instance, based on the target image and the additional clarifying question; and
   generating a corresponding training instance output, for the given training instance, based on the additional response to the additional clarifying question.
Example 25. The method of example 21, further comprising:
   in response to determining to make the prediction of the target image:
   determining, based on the additional second VLM output or further additional second VLM output, the prediction of the target image;
   causing the prediction of the target image to be provided by the second VLM and to the first VLM; and
   determining, based on the prediction of the target image, the result of the dialog.
Example 26. The method of example 1, wherein the first set of instructions for the dialog instruct the first VLM to truthfully and accurately generate the one or more corresponding answers in furtherance of responding to the one or more corresponding questions, wherein the second set of instructions for the dialog instruct the second VLM to generate the one or more corresponding questions in furtherance of identifying the target image in the ordered set of candidate images in response to predicting a known current description of the target image is insufficient to identify the target image, and wherein the second set of instructions for the dialog instruct the second VLM to make a prediction of the target image in the ordered set of candidate images in response to predicting a known current description of the target image is sufficient to identify the target image.
Example 27. The method of example 26, wherein the second set of instructions for the dialog further instruct the second VLM to generate, in response to receiving each of the one or more corresponding answers in furtherance of responding to the one or more corresponding questions, the known current description of the target image.
Example 28. The method of example 26, wherein the first set of instructions for the dialog is specific to a particular domain of the target image, and wherein the second set of instructions for the dialog is also specific to the particular domain of the target image.
Example 29. The method of example 1, wherein the dialog is a text-based dialog or speech-based dialog.
Example 30. The method of example 1, further comprising:
   subsequent to causing the given VLM to be trained based on the one or more training instances:
   causing the given VLM to be deployed.
Example 31. The method of example 30, wherein causing the given VLM to be deployed comprises:
   receiving, from one or more vision components of a robot, vision data that captures performance of a robotic task by the robot;
   processing, using the given VLM, the vision data and a set of instructions associated with the robotic task to generate output; and
   determining, based on the output, whether the robot successfully performed the robotic task.
Example 32. The method of example 31, further comprising:
   in response to determining that the robot successfully performed the robotic task:
   causing the robot to terminate performance of the robotic task.
Example 33. The method of example 31, further comprising:
   in response to determining that the robot successfully performed the robotic task:
   causing the robot to continue performance of the robotic task.
Example 34. The method of example 30, wherein causing the given VLM to be deployed comprises:
   receiving vision data that captures an image or video;
   processing, using the given VLM, the vision data and a set of instructions associated with a captioning task to generate output;
   determining, based on the output, captions for the image or the video; and
   causing the captions for the image or the video to be stored in association with the image or the video.
Example 35. The method of example 30, wherein causing the given VLM to be deployed comprises:
   receiving, from one or more vision components of a client device, vision data that captures an environment of the client device or content that is being displayed on the client device;
   receiving, from one or more input components of the client device of a user, natural language input that includes a question with respect to the vision data;
   processing, using the given VLM, the vision data and the natural language input to generate output;
   determining, based on the output, an answer to the question included in the natural language input; and
   causing the answer to be provided for presentation to the user of the client device.
Example 36. The method of example 30, wherein the given VLM is specific to a particular task or a particular domain, and wherein causing the given VLM to be deployed comprises:
   causing the given VLM to be deployed for utilization in the particular task or the particular domain.
Example 37. The method of example 30, wherein the given VLM is the third VLM, wherein the third VLM is associated with a third-party entity, and wherein causing the given VLM to be deployed comprises:
   transmitting the given VLM to a third-party system that is associated with the third-party entity, wherein transmitting the given VLM to the third-party system causes the third-party system to deploy the given VLM.
Example 38. The method of example 30, wherein causing the given VLM to be deployed is in response to determining that one or more conditions are satisfied, wherein the one or more conditions comprise one or more of: whether a threshold quantity of training instances have been utilized in training the given VLM, whether a threshold duration of time has elapsed since the given VLM was last deployed, or whether performance of the given VLM satisfies a threshold performance measure.
Example 39. A method implemented by one or more processors, the method comprising:
   configuring a dialog between a first vision-language model (VLM) and a second VLM,
      wherein configuring the dialog between the first VLM and the second VLM comprises:
      providing the first VLM with a target image and a first set of instructions for the dialog; and
      providing the second VLM with an ordered set of candidate images and a second set of instructions for the dialog, wherein the ordered set of candidate images includes the target image and at least one additional image;
   causing the dialog to be conducted between the first VLM and the second VLM, wherein the second VLM utilizes the second set of instructions for the dialog to generate one or more corresponding questions in furtherance of identifying the target image in the ordered set of candidate images, and wherein the first VLM utilizes the first set of instructions for the dialog to generate one or more corresponding answers in furtherance of responding to the one or more corresponding questions;
   generating, based on the dialog, the one or more training instances for subsequent utilization in training a given VLM, the given VLM being one of the first VLM, the second VLM, or a third VLM; and
   cause the one or more training instances to be utilized in training the given VLM. Example 40. A system comprising one or more processors and memory storing instructions that, when executed, cause the one or more processors to perform the method of any one of examples 1-39.
Example 41. A non-transitory computer readable storage medium storing instructions that, when executed by one or more processors of a system, cause the system to perform the method of any one of examples 1-39.

In addition, some implementations include one or more processors (e.g., central processing unit(s) (CPU(s)), graphics processing unit(s) (GPU(s), and/or tensor processing unit(s) (TPU(s)) of one or more computing devices, where the one or more processors are operable to execute instructions stored in associated memory, and where the instructions are configured to cause performance of any of the aforementioned methods. Some implementations also include one or more non-transitory computer readable storage media storing computer instructions executable by one or more processors to perform operations of any of the aforementioned methods. Some implementations also include a computer program product including instructions executable by one or more processors to perform operations of any of the aforementioned methods.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

## Claims

1. A method implemented by one or more processors, the method comprising:
configuring a dialog between a first vision-language model (VLM) and a second VLM, wherein configuring the dialog between the first VLM and the second VLM comprises:
providing the first VLM with a target image and a first set of instructions for the dialog; and
providing the second VLM with an ordered set of candidate images and a second set of instructions for the dialog, wherein the ordered set of candidate images includes the target image and at least one additional image;
causing the dialog to be conducted between the first VLM and the second VLM, wherein the second VLM utilizes the second set of instructions for the dialog to generate one or more corresponding questions in furtherance of identifying the target image in the ordered set of candidate images, and wherein the first VLM utilizes the first set of instructions for the dialog to generate one or more corresponding answers in furtherance of responding to the one or more corresponding questions;
determining, based on a result of the dialog that was conducted between the first VLM and the second VLM, whether to utilize the dialog in generating one or more training instances for subsequent utilization in training a given VLM, the given VLM being one of the first VLM, the second VLM, or a third VLM; and
in response to determining to utilize the dialog in generating one or more training instances for subsequent utilization in training the given VLM:
generating, based on the dialog, the one or more training instances for subsequent utilization in training the given VLM; and
cause the one or more training instances to be utilized in training the given VLM.

2. The method of claim 1, further comprising:
causing, based on the one or more training instances, the given VLM to be trained, wherein each of the one or more training instances includes a corresponding training instance input and a corresponding training instance output, wherein the corresponding training instance input includes the target image and a given corresponding question, of the one or more corresponding questions, generated by the second VLM during the dialog, and wherein the corresponding training instance output includes a given corresponding answer, of the one or more corresponding answers, generated by the first VLM during the dialog and responsive to the given corresponding question.

3. The method of claim 2, wherein:
a) causing the given VLM to be trained based on a given training instance, of the one or more training instances, comprises:
processing, using the given VLM, the target image and the given corresponding question, included in the corresponding training instance input for the given training instance, to generate a corresponding predicted answer that is predicted to be responsive to the given corresponding question and that is based on the target image,
generating, based on comparing the corresponding predicted answer to the given corresponding answer, included in the corresponding training instance output for the given training instance, one or more losses, and
updating, based on the one or more losses, the given VLM; or
b) the given VLM is the third VLM, wherein the third VLM is associated with a third-party entity, and wherein causing the given VLM to be trained based on a given training instance, of the one or more training instances, comprises:
transmitting the one or more training instances to a third-party system that is associated with the third-party entity, wherein transmitting the one or more training instances to the third-party system causes the third-party system to:
process, using the given VLM, the target image and the given corresponding question, included in the corresponding training instance input for the given training instance, to generate a corresponding predicted answer that is predicted to be responsive to the given corresponding question and that is based on the target image;
generate, based on comparing the corresponding predicted answer to the given corresponding answer, included in the corresponding training instance output for the given training instance, one or more losses; and
update, based on the one or more losses, the given VLM.

4. The method of claim 1, wherein determining to utilize the dialog in generating one or more training instances for subsequent utilization in training the given VLM is based on the result of the dialog that was conducted between the first VLM and the second VLM indicating that the second VLM successfully identified the target image in the ordered set of candidate images, and wherein the method further comprises:
in response to the result of the dialog that was conducted between the first VLM and the second VLM indicating that the second VLM successfully identified the target image in the ordered set of candidate images:
configuring an additional dialog between the first VLM and the second VLM, wherein configuring the additional dialog between the first VLM and the second VLM comprises:
providing the first VLM with the target image and the first set of instructions for the additional dialog; and
providing the second VLM with an alternative ordered set of candidate images and the second set of instructions for the additional dialog, wherein the alternative ordered set of candidate images includes the target image and the at least one additional image, and wherein an order of the target image and the at least one additional image, in the alternative ordered set of candidate images for the additional dialog, is a permuted order of the target image and the at least one additional image relative to the ordered set of candidate images for the additional dialog;
causing the additional dialog to be conducted between the first VLM and the second VLM, wherein the second VLM utilizes the second set of instructions for the additional dialog to generate one or more additional corresponding questions in furtherance of identifying the additional target image in the ordered set of candidate images, and wherein the first VLM utilizes the first set of instructions for the additional dialog to generate one or more additional corresponding answers in furtherance of responding to the one or more additional corresponding questions; and
wherein determining whether to utilize the dialog in generating the one or more training instances for subsequent utilization in training the given VLM is further based on an additional result of the additional dialog that was conducted between the first VLM and the second VLM.

5. The method of claim 4, further comprising:
a) in response to the additional result of the additional dialog that was conducted between the first VLM and the second VLM indicating that the second VLM successfully identified the target image in the alternative ordered set of candidate images:
generating, based on the additional dialog, one or more of the training instances for subsequent utilization in training the given VLM; and/or
b) in response to the additional result of the additional dialog that was conducted between the first VLM and the second VLM indicating that the second VLM did not successfully identify the target image in the alternative ordered set of candidate images:
refraining from generating, based on the dialog, the one or more training instances for subsequent utilization in training the given VLM,
discarding the dialog, and
discarding the additional dialog.

6. The method of claim 1, further comprising:
selecting the target image; and
selecting, based on the target image, the at least one additional image that is included in the ordered set of candidate images, and optionally wherein:
the target image is selected based on the target image belonging to a particular domain, and wherein the at least one additional image, that is included in the ordered set of candidate images, is selected based on the at least one additional image also belonging to the particular domain; and/or
the at least one additional image, that is included in the ordered set of candidate images, is selected based on the at least one additional image being visually similar to the target image; and/or
the at least one additional image, that is included in the ordered set of candidate images, is selected based on the at least one additional image being semantically similar to the target image.

7. The method of claim 1, wherein causing the dialog to be conducted between the first VLM and the second VLM comprises:
processing, using the first VLM, at least the target image and the first set of instructions for the dialog to generate first VLM output;
determining, based on the first VLM output, a description of the target image;
causing the description of the target image to be provided by the first VLM and to the second VLM;
processing, using the second VLM, at least the description of the target image, the second set of instructions for the dialog, and the ordered set of candidate images to generate second VLM output; and
determining, based on the second VLM output, whether to ask the first VLM a clarifying question, as one or more of the corresponding questions in furtherance of identifying the target image in the ordered set of candidate images, or to make a prediction of the target image, from among the ordered set of candidate images.

8. The method of claim 7, further comprising:
in response to determining to ask the first VLM a clarifying question:
determining, based on the second VLM output or additional second VLM output, the clarifying question;
causing the clarifying question to be provided by the second VLM and to the first VLM;
processing, using the first VLM, at least the target image, the first set of instructions for the dialog, and the clarifying question to generate additional first VLM output;
determining, based on the additional first VLM output, a response to the clarifying question;
causing the response to the clarifying question to be provided by the first VLM and to the second VLM;
processing, using the second VLM, at least the response to the clarifying question, the second set of instructions for the dialog, and the ordered set of candidate images to generate further additional second VLM output; and
determining, based on the further additional second VLM output, whether to ask the first VLM an additional clarifying question, as one or more of the corresponding questions in furtherance of identifying the target image in the ordered set of candidate images, or to make the prediction of the target image, from among the ordered set of candidate images, and optionally wherein generating a given training instance, of the one or more training instances, for subsequent utilization in training the given VLM and based on the dialog comprises:
generating a corresponding training instance input, for the given training instance, based on the target image and the clarifying question; and
generating a corresponding training instance output, for the given training instance, based on the response to the clarifying question.

9. The method of claim 7, further comprising:
in response to determining to make the prediction of the target image:
determining, based on the second VLM output or additional second VLM output, the prediction of the target image;
causing the prediction of the target image to be provided by the second VLM and to the first VLM; and
determining, based on the prediction of the target image, the result of the dialog.

10. The method of claim 1, wherein causing the dialog to be conducted between the first VLM and the second VLM comprises:
processing, using the second VLM, at least the ordered set of candidate images and the second set of instructions for the dialog to generate second VLM output;
determining, based on the second VLM output, a clarifying question, as one or more of the corresponding questions in furtherance of identifying the target image in the ordered set of candidate images;
causing the clarifying question to be provided by the second VLM and to the first VLM;
processing, using the first VLM, at least the target image, the first set of instructions for the dialog, and the clarifying question to generate first VLM output;
determining, based on the first VLM output, a response to the clarifying question;
causing the response to the clarifying question to be provided by the first VLM and to the second VLM;
processing, using the second VLM, at least the response to the clarifying question, the second set of instructions for the dialog, and the ordered set of candidate images to generate additional second VLM output; and
determining, based on the additional second VLM output, whether to ask the first VLM an additional clarifying question, as one or more of the corresponding questions in furtherance of identifying the target image in the ordered set of candidate images, or to make the prediction of the target image, from among the ordered set of candidate images, and optionally wherein the method further comprises:
in response to determining to make the prediction of the target image:
determining, based on the additional second VLM output or further additional second VLM output, the prediction of the target image;
causing the prediction of the target image to be provided by the second VLM and to the first VLM; and
determining, based on the prediction of the target image, the result of the dialog.

11. The method of claim 10, further comprising:
in response to determining to ask the first VLM an additional clarifying question:
determining, based on the additional second VLM output or further additional second VLM output, the additional clarifying question;
causing the additional clarifying question to be provided by the second VLM and to the first VLM;
processing, using the first VLM, at least the target image, the first set of instructions for the dialog, and the additional clarifying question to generate additional first VLM output;
determining, based on the additional first VLM output, an additional response to the additional clarifying question;
causing the additional response to the additional clarifying question to be provided by the first VLM and to the second VLM;
processing, using the second VLM, at least the additional response to the clarifying question, the second set of instructions for the dialog, and the ordered set of candidate images to generate yet further additional second VLM output; and
determining, based on the yet further additional second VLM output, whether to ask the first VLM a further additional clarifying question, as one or more of the corresponding questions in furtherance of identifying the target image in the ordered set of candidate images, or to make the prediction of the target image, from among the ordered set of candidate images, wherein generating a given training instance, of the one or more training instances, for subsequent utilization in training the given VLM and based on the dialog comprises:
generating a corresponding training instance input, for the given training instance, based on the target image and the clarifying question; and
generating a corresponding training instance output, for the given training instance, based on the response to the clarifying question, and optionally wherein generating a given additional training instance, of the one or more training instances, for subsequent utilization in training the given VLM and based on the dialog comprises:
generating a corresponding training instance input, for the given additional training instance, based on the target image and the additional clarifying question; and
generating a corresponding training instance output, for the given training instance, based on the additional response to the additional clarifying question.

12. The method of claim 1, wherein the first set of instructions for the dialog instruct the first VLM to truthfully and accurately generate the one or more corresponding answers in furtherance of responding to the one or more corresponding questions, wherein the second set of instructions for the dialog instruct the second VLM to generate the one or more corresponding questions in furtherance of identifying the target image in the ordered set of candidate images in response to predicting a known current description of the target image is insufficient to identify the target image, and wherein the second set of instructions for the dialog instruct the second VLM to make a prediction of the target image in the ordered set of candidate images in response to predicting a known current description of the target image is sufficient to identify the target image, and optionally wherein:
the second set of instructions for the dialog further instruct the second VLM to generate, in response to receiving each of the one or more corresponding answers in furtherance of responding to the one or more corresponding questions, the known current description of the target image; and/or
the first set of instructions for the dialog is specific to a particular domain of the target image, and wherein the second set of instructions for the dialog is also specific to the particular domain of the target image.

13. The method of claim 1, further comprising:
subsequent to causing the given VLM to be trained based on the one or more training instances:
causing the given VLM to be deployed, and optionally wherein:
the given VLM is the third VLM, wherein the third VLM is associated with a third-party entity, and causing the given VLM to be deployed comprises transmitting the given VLM to a third-party system that is associated with the third-party entity, wherein transmitting the given VLM to the third-party system causes the third-party system to deploy the given VLM.

14. A system comprising one or more processors and memory storing instructions that, when executed, cause the one or more processors to perform the method of any one of claims 1-13.

15. A non-transitory computer readable storage medium storing instructions that, when executed by one or more processors of a system, cause the system to perform the method of any one of claims 1-13.
